# EUROPÄISCHE PATENTANMELDUNG

(11) **EP 2 921 052 A1**
(43) Veröffentlichungstag der Anmeldung: **23.09.2015**
(21) Anmeldenummer: 15158299.6
(22) Anmeldetag: 22.05.2013
(51) Int. Cl.: A01N 43/653, A01N 43/713, A01N 59/20, A01N 47/36, A01N 43/88, A01N 43/80, A01N 43/707, A01N 43/70, A01N 43/66, A01N 43/40, A01N 43/10, A01N 41/10, A01N 37/48, A01N 33/22, A01P 13/00

(54) **HERBIZIDE ZUSAMMENSETZUNGEN ENTHALTEND N-(TETRAZOL-5-YL)- UND N-(TRIAZOL-5-YL)ARYLCARBONSÄUREAMIDE**

(30) Priorität: 24.05.2012 EP 12169189
(62) Teilanmeldung aus: 13723814.3
(71) Anmelder: Bayer CropScience AG, 40789 Monheim (DE)
(72) Erfinder: Van Almsick, Andreas, 61184 Karben (DE); Gatzweiler, Elmar, 61231 Bad Nauheim (DE); Hacker, Erwin, 88515 Langenenslingen (DE); Braun, Ralf, 76857 Ramberg (DE); Menne, Hubert, 55252 Mainz-Kastel (DE); Trabold, Klaus, 69123 Heidelberg (DE); Waldraff, Christian, 61118 Bad Vilbel (DE)
(74) Vertreter: BIP Patents

(57) **Zusammenfassung**

Es werden herbizide Zusammensetzungen beschrieben, die Wirkstoffe aus der Gruppe der N-(Tetrazol-5-yl)- und N-(Triazol-5-yl)arylcarbonsäure-amide sowie weitere Herbizide und gegebenenfalls Safener enthalten. Diese herbiziden Zusammensetzungen sind für den Einsatz gegen Schadpflanzen in Nutzpflanzenkulturen besonders geeignet.

## Beschreibung

Die vorliegende Erfindung betrifft agrochemisch wirksame herbizide Zusammensetzungen, Verfahren zu deren Herstellung sowie deren Verwendung zur Bekämpfung von Schadpflanzen.

WO 2012/028579 A1 und die prioritätsältere und nicht vorveröffentlichte EP11176378 offenbaren bestimmte N-(Tetrazol-5-yl)- und N-(Triazol-5-yl)arylcarbonsäureamide mit herbiziden Eigenschaften. Allerdings zeigen diese Wirkstoffe nicht immer eine ausreichende Wirkung gegen Schadpflanzen und/oder sie sind zum Teil nicht voll verträglich mit einigen wichtigen Kulturpflanzen, wie Getreidearten, Mais oder Reis.

Aufgabe der vorliegenden Erfindung ist es daher, herbizide Zusammensetzungen bereitzustellen, in welchen die Wirksamkeit gegenüber Schadpflanzen und/oder Selektivität der oben genannten Herbizide gegenüber wichtigen Kulturpflanzen erhöht ist. Diese Aufgabe wird durch die nachfolgend beschriebenen erfindungsgemäßen herbiziden Zusammensetzungen enthaltend bestimmte N-(Tetrazol-5-yl)- und N-(Triazol-5-yl)arylcarbonsäureamide, weitere Herbizide und gegebenenfalls Safener, gelöst.

Gegenstand der vorliegenden Erfindung sind herbizide Zusammensetzungen, enthaltend
(A) eine oder mehrere Verbindungen der Formel (I) (Komponente A) oder deren Salze, 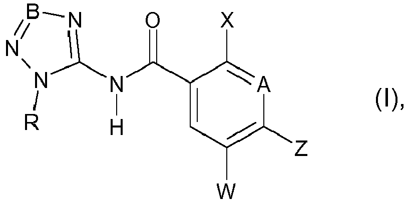 worin die Symbole und Indizes folgende Bedeutungen haben:
   - A: bedeutet N oder CY,
   - B: bedeutet N oder CH,
   - X: bedeutet Nitro, Halogen, Cyano, Formyl, Rhodano, (C₁-C₆)-Alkyl, Halogen-(C₁-C₆)-alkyl, (C₂-C₆)-Alkenyl, Halogen-(C₂-C₆)-alkenyl, (C₂-C₆)-Alkinyl, Halogen-(C₃-C₆)-alkinyl, (C₃-C₆)-Cycloalkyl, Halogen-(C₃-C₆)-cycloalkyl, (C₃-C₆)-Cycloalkyl-(C₁-C₆)-alkyl, Halogen-(C₃-C₆)-cycloalkyl-(C₁-C₆)-alkyl, COR¹, COOR¹, OCOOR¹, NR¹COOR¹, C(O)N(R¹)₂, NR¹C(O)N(R¹)₂, OC(O)N(R¹)₂, C(O)NR¹OR¹, OR¹, OCOR¹, OSO₂R², S(O)ₙR², SO₂OR¹, SO₂N(R¹)₂, NR¹SO₂R², NR¹COR¹, (C₁-C₆)-Alkyl-S(O)ₙR², (C₁-C₆)-Alkyl-OR¹, (C₁-C₆)-Alkyl-OCOR¹, (C₁-C₆)-Alkyl-OSO₂R², (C₁-C₆)-Alkyl-CO₂R¹, (C₁-C₆)-Alkyl-SO₂OR¹, (C₁-C₆)-Alkyl-CON(R¹)₂, (C₁-C₆)-Alkyl-SO₂N(R¹)₂, (C₁-C₆)-Alkyl-NR¹COR¹, (C₁-C₆)-Alkyl-NR¹SO₂R², NR₁R₂, P(O)(OR⁵)₂, CH₂P(O)(OR⁵)₂, (C₁-C₆)-Alkyl-Heteroaryl, (C₁-C₆)-Alkyl-Heterocyclyl, wobei die beiden letztgenannten Reste jeweils durch s Reste aus der Gruppe bestehend aus Halogen, (C₁-C₆)-Alkyl, Halogen-(C₁-C₆)-alkyl, S(O)ₙ-(C₁-C₆)-Alkyl, (C₁-C₆)-Alkoxy und Halogen-(C₁-C₆)-alkoxy substituiert sind, und wobei Heterocyclyl n Oxogruppen trägt,
   - Y: bedeutet Wasserstoff, Nitro, Halogen, Cyano, Rhodano, (C₁-C₆)-Alkyl, Halogen-(C₁-C₆)-alkyl, (C₂-C₆)-Alkenyl, Halogen-(C₂-C₆)-alkenyl, (C₂-C₆)-Alkinyl, Halogen-(C₂-C₆)-alkinyl, (C₃-C₆)-Cycloalkyl, (C₃-C₆)-Cycloalkenyl, Halogen-(C₃-C₆)-cycloalkyl, (C₃-C₆)-Cycloalkyl-(C₁-C₆)-alkyl, Halogen-(C₃-C₆)-cycloalkyl-(C₁-C₆)-alkyl, COR¹, COOR¹, OCOOR¹, NR¹COOR¹, C(O)N(R¹)₂, NR¹C(O)N(R¹)₂, OC(O)N(R¹)₂, CO(NOR¹)R¹, NR¹SO₂R², NR¹COR¹, OR¹, OSO₂R², S(O)ₙR², SO₂OR¹, SO₂N(R¹)₂ (C₁-C₆)-Alkyl-S(O)ₙR², (C₁-C₆)-Alkyl-OR¹, (C₁-C₆)-Alkyl-OCOR¹, (C₁-C₆)-Alkyl-OSO2R², (C₁-C₆)-Alkyl-CO₂R¹, (C₁-C₆)-Alkyl-CN, (C₁-C₆)-Alkyl-SO₂OR¹, (C₁-C₆)-Alkyl-CON(R¹)₂, (C₁-C₆)-Alkyl-SO₂N(R¹)₂, (C₁-C₆)-Alkyl-NR¹COR¹, (C₁-C₆)-Alkyl-NR¹SO₂R², N(R¹)₂, P(O)(OR⁵)₂, CH₂P(O)(OR⁵)₂, (C₁-C₆)-Alkyl-Phenyl, (C₁-C₆)-Alkyl-Heteroaryl, (C₁-C₆)-Alkyl-Heterocyclyl, Phenyl, Heteroaryl oder Heterocyclyl, wobei die sechs letztgenannten Reste jeweils durch s Reste aus der Gruppe bestehend aus Halogen, Nitro, Cyano, (C₁-C₆)-Alkyl, Halogen-(C₁-C₆)-alkyl, (C₃-C₆)-Cycloalkyl, S(O)ₙ-(C₁-C₆)-Alkyl, (C₁-C₆)-Alkoxy, Halogen-(C₁-C₆)-alkoxy, (C₁-C₆)-Alkoxy-(C₁-C₄)-alkyl und Cyanomethyl substituiert sind, und wobei Heterocyclyl n Oxogruppen trägt,
   - Z: bedeutet Halogen, Cyano, Rhodano, Halogen-(C₁-C₆)-alkyl, (C₂-C₆)-Alkenyl, Halogen-(C₂-C₆)-alkenyl, (C₂-C₆)-Alkinyl, Halogen-(C₂-C₆)-alkinyl, (C₃-C₆)-Cycloalkyl, Halogen-(C₃-C₆)-cycloalkyl, (C₃-C₆)-Cycloalkyl-(C₁-C₆)-alkyl, Halogen-(C₃-C₆)-cycloalkyl-(C₁-C₆)-alkyl, COR¹, COOR¹, OCOOR¹, NR¹COOR¹, C(O)N(R¹)₂, NR¹C(O)N(R¹)₂, OC(O)N(R¹)₂, C(O)NR¹OR¹, OSO₂R², S(O)ₙR², SO₂OR¹, SO₂N(R¹)₂, NR¹SO₂R², NR¹COR¹, (C₁-C₆)-Alkyl-S(O)ₙR², (C₁-C₆)-Alkyl-OR¹, (C₁-C₆)-Alkyl-OCOR¹, (C₁-C₆)-Alkyl-OSO₂R², (C₁-C₆)-Alkyl-CO₂R¹, (C₁-C₆)-Alkyl-SO₂OR¹, (C₁-C₆)-Alkyl-CON(R¹)₂, (C₁-C₆)-Alkyl-SO₂N(R¹)₂, (C₁-C₆)-Alkyl-NR¹COR¹, (C₁-C₆)-Alkyl-NR¹SO₂R², N(R¹)₂, P(O)(OR⁵)₂, Heteroaryl, Heterocyclyl oder Phenyl, wobei die drei letztgenannten Reste jeweils durch s Reste aus der Gruppe bestehend aus Halogen, Nitro, Cyano, (C₁-C₆)-Alkyl, Halogen-(C₁-C₆)-alkyl, (C₃-C₆)-Cycloalkyl, S(O)ₙ-(C₁-C₆)-Alkyl, (C₁-C₆)-Alkoxy oder Halogen-(C₁-C₆)-alkoxy substituiert sind, und wobei Heterocyclyl n Oxogruppen trägt, oder
   Z kann auch Wasserstoff, (C₁-C₆)-Alkyl oder (C₁-C₆)-Alkoxy bedeuten, falls Y für den Rest S(O)ₙR² steht,
   - W: bedeutet Wasserstoff, (C₁-C₆)-Alkyl, Halogen-(C₁-C₆)-alkyl, (C₂-C₆)-Alkenyl, Halogen-(C₂-C₆)-alkenyl, (C₂-C₆)-Alkinyl, Halogen-(C₂-C₆)-alkinyl, (C₃-C₇)-Cycloalkyl, (C₃-C₇)-Halogencycloalkyl, (C₁-C₆)-Alkoxy, (C₁-C₆)-Halogenalkoxy, S(O)ₙ-(C₁-C₆)-Alkyl, S(O)ₙ-(C₁-C₆)-Halogenalkyl, (C₁-C₆)-Alkoxy-(C₁-C₄)-alkyl, (C₁-C₆)-Alkoxy-(C₁-C₄)-halogenalkyl, Halogen, Nitro, NR³COR³ oder Cyano,
   - R: bedeutet (C₁-C₈)-Alkyl, Halogen-(C₁-C₈)-alkyl, (C₂-C₈)-Alkenyl, Halogen-(C₂-C₈)-alkenyl, (C₂-C₈)-Alkinyl, Halogen-(C₂-C₈)-alkinyl, wobei diese sechs vorstehend genannten Reste jeweils durch s Reste aus der Gruppe bestehend aus Hydroxy, Nitro, Cyano, SiR⁵₃, PO(OR⁵)₂, S(O)ₙ-(C₁-C₆)-Alkyl, S(O)ₙ-(C₁-C₆)-Halogenalkyl, (C₁-C₆)-Alkoxy, Halogen-(C₁-C₆)-alkoxy, N(R³)₂, COR³, COOR³, OCOR³, NR³COR³, NR³SO₂R⁴, O(C₁-C₂)-Alkyl-(C₃-C₆)-Cycloalkyl, (C₃-C₆)-Cycloalkyl, Heteroaryl, Heterocyclyl, Phenyl, Q-Heteroaryl, Q-Heterocyclyl, Q-Phenyl und Q-Benzyl substituiert sind, wobei die sieben letztgenannten Reste jeweils durch s Reste aus der Gruppe bestehend aus Methyl, Ethyl, Methoxy, Trifluormethyl, Cyano und Halogen substituiert sind, und wobei Heterocyclyl n Oxogruppen trägt, oder
   - R: bedeutet jeweils durch s Reste aus der Gruppe bestehend aus Halogen, Nitro, Cyano, (C₁-C₆)-Alkyl, Halogen-(C₁-C₆)-alkyl, (C₃-C₆)-Cycloalkyl, S(O)ₙ-(C₁-C₆)-Alkyl, (C₁-C₆)-Alkoxy, Halogen-(C₁-C₆)-alkoxy und (C₁-C₆)-Alkoxy-(C₁-C₄)-alkyl substituiertes (C₃-C₇)-Cycloalkyl, Heteroaryl, Heterocyclyl oder Phenyl, wobei Heterocyclyl n Oxogruppen trägt,
   - Q: bedeutet O, S, oder NR³,
   - R¹: bedeutet Wasserstoff, (C₁-C₆)-Alkyl, (C₁-C₆)-Halogenalkyl, (C₂-C₆)-Alkenyl, (C₂-C₆)-Halogenalkenyl, (C₂-C₆)-Alkinyl, (C₂-C₆)-Halogenalkinyl, (C₃-C₆)-Cycloalkyl, (C₃-C₆)-Cycloalkenyl, (C₃-C₆)-Halogencycloalkyl, (C₁-C₆)-Alkyl-O-(C₁-C₆)-alkyl, (C₃-C₆)-Cycloalkyl-(C₁-C₆)-alkyl, Phenyl, Phenyl-(C₁-C₆)-alkyl, Heteroaryl, (C₁-C₆)-Alkyl-Heteroaryl, Heterocycl, (C₁-C₆)-Alkyl-Heterocyclyl, (C₁-C₆)-Alkyl-O-Heteroaryl, (C₁-C₆)-Alkyl-O-Heterocyclyl, (C₁-C₆)-Alkyl-NR³-Heteroaryl oder (C₁-C₆)-Alkyl-NR³-Heterocyclyl wobei die 21 letztgenannten Reste jeweils durch s Reste aus der Gruppe bestehend aus Cyano, Halogen, Nitro, Rhodano, OR³, S(O)ₙR⁴, N(R³)₂, NR³OR³, COR³, OCOR³, SCOR⁴, NR³COR³, NR³SO₂R⁴, CO₂R³, COSR⁴, CON(R³)₂ und (C₁-C₄)-Alkoxy-(C₂-C₆)-alkoxycarbonyl substituiert sind, und wobei Heterocyclyl n Oxogruppen trägt,
   - R²: bedeutet (C₁-C₆)-Alkyl, (C₁-C₆)-Halogenalkyl, (C₂-C₆)-Alkenyl, (C₂-C₆)-Halogenalkenyl, (C₂-C₆)-Alkinyl, (C₂-C₆)-Halogenalkinyl, (C₃-C₆)-Cycloalkyl, (C₃-C₆)-Cycloalkenyl, (C₃-C₆)-Halogencycloalkyl, (C₁-C₆)-Alkyl-O-(C₁-C₆)-alkyl, (C₃-C₆)-Cycloalkyl-(C₁-C₆)-alkyl, Phenyl, Phenyl-(C₁-C₆)-alkyl, Heteroaryl, (C₁-C₆)-Alkyl-Heteroaryl, Heterocyclyl, (C₁-C₆)-Alkyl-Heterocyclyl, (C₁-C₆)-Alkyl-O-Heteroaryl, (C₁-C₆)-Alkyl-O-Heterocyclyl, (C₁-C₆)-Alkyl-NR³-Heteroaryl oder (C₁-C₆)-Alkyl-NR³-Heterocyclyl, wobei die 21 letztgenannten Reste jeweils durch s Reste aus der Gruppe bestehend aus Cyano, Halogen, Nitro, Rhodano, OR³, S(O)ₙR⁴, N(R³)₂, NR³OR³, COR³, OCOR³, SCOR⁴, NR³COR³, NR³SO₂R⁴, CO₂R³, COSR⁴, CON(R³)₂ und (C₁-C₄)-Alkoxy-(C₂-C₆)-alkoxycarbonyl substituiert sind, und wobei Heterocyclyl n Oxogruppen trägt,
   - R³: bedeutet Wasserstoff, (C₁-C₆)-Alkyl, (C₂-C₆)-Alkenyl, (C₂-C₆)-Alkinyl, (C₃-C₆)-Cycloalkyl, (C₃-C₆)-Cycloalkyl-(C₁-C₆)-alkyl oder Phenyl,
   - R⁴: bedeutet (C₁-C₆)-Alkyl, (C₂-C₆)-Alkenyl, (C₂-C₆)-Alkinyl, (C₃-C₆)-Cycloalkyl, (C₃-C₆)-Cycloalkyl-(C₁-C₆)-alkyl oder Phenyl,
   - R⁵: bedeutet (C₁-C₄)-Alkyl,
   - n: bedeutet 0, 1 oder 2,
   - s: bedeutet 0, 1, 2 oder 3,
   sowie
(B) ein oder mehrere Herbizide (Komponente B) ausgewählt aus den Gruppen B1 bis B11:
   - B1: 1,3-Diketoverbindungen, umfassend prohexadione-calcium, trinexapac-ethyl,alloxydim, clethodim, cycloxydim, profoxydim, sethoxydim, tepraloxydim, tralkoxydim, mesotrione, sulcotrione, tefuryltrione, tembotrione, bicyclopyrone, pinoxaden,
   - B2: (Sulfon)Amide, umfassend beflubutamide, bromobutide, dimethenamide, dimethenamide-P, diphenamide, napropamide, pethoxamid, N-[3-Chlor-4-(1-methylethyl)-phenyl]-2-methylpentanamid, naptalam, propyzamide,
   diflufenican, etobenzanid, flufenacet, mefenacet, mefluidide, pentanochlor, picolinafen, propanil, N-phenylphtalamic acid,
   acetochlor, alachlor, butachlor, dimethachlor, metazachlor, metolachlor, S-metolachlor, pretilachlor, propachlor, propisochlor, (2-chloro-6'-ethyl-N-isopropoxymethylaceto-o-toluidide), thenylchlor,
   asulam, carbaryl, carbetamide, chlorpropham, desmedipham, phenmedipham, propham,
   butylate, cycloate, dimepiperate, EPTC, esprocarb, methasulfocarb, molinate, orbencarb, pebulate, prosulfocarb, pyributicarb, thiobencarb, tri-allate, vernolate, amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, flucetosulfuron, flupyrsulfuron-methyl-sodium, foramsulfuron, halosulfuron-methyl, imazosulfuron, iodosulfuron-methyl-sodium, mesosulfuron-methyl, metsulfuron-methyl, monosulfuron, nicosulfuron, orthosulfamuron, oxasulfuron, primisulfuron-methyl, prosulfuron, pyrazosulfuron-ethyl, rimsulfuron, sulfometuron-methyl, sulfosulfuron, thifensulfuron-methyl, triasulfuron, tribenuron-methyl, trifloxysulfuron (sodium), triflusulfuron-methyl, tritosulfuron, (benzoic acid, 2-[[[[[4-methoxy-6-(methylthio)-2-pyrimidinyl]amino]carbonyl]amino]-sulfonyl]methyl-ester),
   flucarbazone-sodium, propoxycarbazone-sodium, thiencarbazone-methyl, cloransulam-methyl, diclosulam, florasulam, flumetsulam, metosulam, penoxsulam, pyroxsulam,
   - B3: Arylnitrile, umfassend
   bromoxynil, dichlobenil, ioxynil, pyraclonil,
   - B4: Azole, umfassendbenzofenap , pyrazolynate, pyrazoxyfen, pyroxasulfone, topramezone, pyrasulfotole, 3-(3-chloro-5-{[1-methyl-3-(trifluormethyl)-1H-pyrazol-5-yl]oxy}phenoxy)-1-methyl-5-(trifluormethyl)-1H-pyrazole, 3-(3-iodo-5-{[1-methyl-3-(trifluormethyl)-1H-pyrazol-5-yl]oxylphenoxy)-1-methyl-5-(trifluormethyl)-1H-pyrazole, 1-ethyl-3-(3-fluoro-5-{[1-methyl-3-(trifluormethyl)-1 H-pyrazol-5-yl]oxy}phenoxy)-5-(trifluormethyl)-1H-pyrazole, pyraflufen-ethyl, fluazolate,
   isouron, isoxaben, isoxaflutole,
   imazamethabenzmethyl, imazamox, imazapic, imazapyr, imazaquin, imazethapyr, methazole, oxadiargyl, oxadiazon,
   amicarbazone, carfentrazone-ethyl, sulfentrazone, bencarbazone, amitrole, paclobutrazol, uniconazole, cafenstrole,
   fentrazamide,
   - B5: weitere Herbizide, umfassend Aminocyclopyrachlor, N-acetylthiazolidine-4-carboxylic acid, acrolein, aminopyralid, ammonium pelargonate, ammonium sulfamat, aviglycine, benazolin, benfluralin, benfuresate, bentazone, benzobicyclon, 6-benzylaminopurine, borax, butralin, carvone, catechin, chlorflurenol-methyl, chloridazon, chlormequat chloride, chloracetic acid , chlorphthalim, chlorthal-dimethyl, cinidon-ethyl, cinmethylin, clofencet, clomazone, cloxyfonac, cyanamide, cyclanilide, 6-isopentylamino-purin, kinetin, zeatin, dalapon, daminozide, dazomet, n-decanol, difenzoquat metilsulfate, 2,6-diisopropylnaphtalene, dikegulac, dimethipin, dimethylarsenic acid, dinitramine, dinoterb, diquat dibromide, dithiopyr, DNOC, endothal, ethafluralin, ethofumesate, ethylchlozate, ferrous sulfate, flamprop-M-methyl, flufenpyr-ethyl, flumetralin, flumiclorac-pentyl, flumioxazin, flupropanate, flurenol, fluridone, flurochloridone, flurtamone, gibberillic acid, indanofan, isopropalin, isoprothiolane, maleic hydrazide, mepiquat chloride, metam, methylarsonic acid, 1-methylcyclopropene, methyl isothiocyanate, nitrophenolate mixture, nonanoic acid, norflurazon, oleic acid, oryzalin, oxaziclomefone, paraquat dichloride, pendimethalin, pentachlorophenol, pentoxazone, petroleum oils, prodiamine, n-propyl-dihydrojasmonate, pyridate, quinoclamine, sintofen, sodium chlorate, sulfuric acid, tar oils, TCA sodium, tecnazene, thiazopyr, triacontanol, trifluralin und urea sulfate,
   - B6: (Het)Arylcarbonsäuren, umfassend
   dicamba, 2,3,6-TBA,
   clopyralid, fluroxypyr, inabenfide, picloram, triclopyr, quinclorac, quinmerac,
   indol-3-ylacetic acid, 4-indol-3-ylbutyric acid,
   2-(1-naphthyl)acetamide, 1-naphtylacetic acid, 2-naphthyloxyacetic acid,
   - B7: organische Phosphorverbindungen, umfassend
   anilofos, bensulide, bilanafos, butimafos, fosamine, glufosinate, glufosinate-Salze, glufosinate-ammonium, glufosinate-sodium, L-glufosinate-ammonium, L-glufosinate-sodium, glyphosate, glyphosate-isopropyl-ammonium, glyphosate-ammonium, glyphosate-trimesium (=sulfosate), glyphosate-diammonium, glyphosate-potassium, piperophos, ethephon und tribufos,
   - B8: Phenylether, umfassend
   acifluorfen-sodium, aclonifen, fluoroglycofen-ethyl, fomesafen, lactofen, oxyfluorfen, bifenox, ethoxyfen-ethyl,
   clomeprop,
   cloprop, dichlorprop, dichlorprop-P, mecoprop, mecoprop-P,
   4-CPA, 2,4-D, MCPA, MCPA-thioethyl,
   2,4-DB, MCPB,
   clodinafop-propargyl, cyhalofop-butyl, diclofop-methyl, diclofop-P-methyl, fenoxaprop-P-ethyl, fluazifop-butyl, fluazifop-P-butyl, haloxyfop, haloxyfop-P, metamifop, propaquizafop, quizalafop, quizalafop-P,
   - B9: Pyrimidine, umfassend
   ancymidol, flurprimidol, pyrimisulfan,
   bispyribac-sodium, pyribenzoxim, pyriminobac-methyl, pyribambenz-isopropyl, pyribambenz-propyl,
   pyriftalid, pyrithiobac-sodium,
   benzfendizone, bromacil, butafenacil, lenacil, terbacil, 2-chloro-4-fluoro-5-[3-methyl-2,6-dioxo-4-(trifluoromethyl)-3,6-dihydropyrimidin-1(2H)-yl]-N-[methyl(1-methylethyl)-sulfamoyl]benzamide,
   - B10: (Thio)harnstoffe, umfassend
   cumyluron,
   chlorbromuron, chlorotoluron, chloroxuron, daimuron, diflufenzopyr, dimefuron, diuron, fluometuron, forchlorfenuron, isoproturon, karbutilate, linuron, methyldymron, metobromuron, metoxuron, monolinuron, neburon, siduron, thidiazuron
   methiuron,
   tebuthiuron,
   methabenzthiazuron,
   - B11: Triazine, umfassend
   triaziflam, indaziflam,
   atrazine, cyanazine, propazine, simazine, terbuthylazine, trietazine, prometon,
   ametryn, dimethametryn, prometryn, simetryn, terbutryn,
   hexazinon, metamitron, metribuzin.

In einer weiteren Ausführungsform enthalten diese herbiziden Zusammensetzungen C) einen oder mehrere Safener (Komponente C) aus der Gruppe bestehend aus benoxacor (C1), cloquintocet-mexyl (C2), cyprosulfamide (C3), dichlormid (C4), fenclorim (C5), fenchlorazole (C6), furilazole (C7), isoxadifen-ethyl (C8), mefenpyr-diethyl (C9),
4-(dichloroacetyl)-1-oxa-4-azaspiro[4.5]decane der CAS 71526-07-3 (C10), 2,2,5-trimethyl-3-(dechloroacetyl)-1,3-oxazolidine der CAS 52836-31-4 (C11).

Die Komponenten B) und C) sind beispielsweise aus "The Pesticide Manual", 15th edition, The British Crop Protection Council and the Royal Soc. of Chemistry, und von der Website http://www.alanwood.net/pesticides/ bekannt.

Die erfindungsgemäßen herbiziden Zusammensetzungen können zusätzliche weitere Komponenten, beispielsweise Pflanzenschutzmittelwirkstoffe anderer Art und/oder im Pflanzenschutz übliche Zusatzstoffe und/oder Formulierungshilfsmittel, enthalten oder zusammen mit diesen eingesetzt werden.

Die Herbizide (A), (B) und gegebenenfalls die Safener (C) können auf bekannte Weise angewendet werden, beispielsweise gemeinsam (beispielsweise als Co-Formulierung oder als Tank-Mischung) oder auch zeitlich kurz hintereinander versetzt (Splitting), z.B. auf die Pflanzen, Pflanzenteile, Pflanzensamen oder die Fläche, auf der die Pflanzen wachsen. Möglich ist z.B. die Anwendung der Einzelwirkstoffe oder der Herbizid-Safener-Kombination in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination. Möglich ist auch die Anwendung der Einzelwirkstoffe oder der Herbizid-Safener-Kombination zur Saatgutbehandlung.

Bevorzugt sind solche erfindungsgemäße Zusammensetzungen, die als Herbizid (A) solche Verbindungen der allgemeinen Formel (I) und deren Salze enthalten, worin
- A: bedeutet N oder CY,
- B: bedeutet N oder CH,
- X: bedeutet Nitro, Halogen, Cyano, Rhodano, (C₁-C₆)-Alkyl, Halogen-(C₁-C₆)-alkyl, (C₂-C₆)-Alkenyl, Halogen-(C₂-C₆)-alkenyl, (C₂-C₆)-Alkinyl, Halogen-(C₃-C₆)-alkinyl, (C₃-C₆)-Cycloalkyl, Halogen-(C₃-C₆)-cycloalkyl, (C₁-C₆)-Alkyl-O-(C₁-C₆)-alkyl, (C₃-C₆)-Cycloalkyl-(C₁-C₆)-alkyl, Halogen-(C₃-C₆)-cycloalkyl-(C₁-C₆)-alkyl, COR¹, OR¹, OCOR¹, OSO₂R², S(O)ₙR², SO₂OR¹, SO₂N(R¹)₂, NR¹SO₂R², NR¹COR¹, (C₁-C₆)-Alkyl-S(O)ₙR², (C₁-C₆)-Alkyl-OR¹, (C₁-C₆)-Alkyl-OCOR¹, (C₁-C₆)-Alkyl-OSO₂R², (C₁-C₆)-Alkyl-CO₂R¹, (C₁-C₆)-Alkyl-SO₂OR¹, (C₁-C₆)-Alkyl-CON(R¹)₂, (C₁-C₆)-Alkyl-SO₂N(R¹)₂, (C₁-C₆)-Alkyl-NR¹COR¹ oder (C₁-C₆)-Alkyl-NR¹SO₂R², (C₁-C₆)-Alkyl-Heteroaryl, (C₁-C₆)-Alkyl-Heterocyclyl, wobei die beiden letztgenannten Reste jeweils durch s Reste aus der Gruppe bestehend aus Halogen, (C₁-C₆)-Alkyl, Halogen-(C₁-C₆)-alkyl, S(O)ₙ-(C₁-C₆)-Alkyl, (C₁-C₆)-Alkoxy und Halogen-(C₁-C₆)-alkoxy substituiert sind, und wobei Heterocyclyl n Oxogruppen trägt,
- Y: bedeutet Wasserstoff, Nitro, Halogen, Cyano, Rhodano, (C₁-C₆)-Alkyl, Halogen-(C₁-C₆)-alkyl, (C₂-C₆)-Alkenyl, Halogen-(C₂-C₆)-alkenyl, (C₂-C₆)-Alkinyl, Halogen-(C₃-C₆)-alkinyl, (C₃-C₆)-Cycloalkyl, (C₃-C₆)-Cycloalkenyl, Halogen-(C₃-C₆)-cycloalkyl, (C₃-C₆)-Cycloalkyl-(C₁-C₆)-alkyl, Halogen-(C₃-C₆)-cycloalkyl-(C₁-C₆)-alkyl, COR¹, OR¹, COOR¹, OSO₂R², S(O)ₙR², SO₂OR¹, SO₂ N(R¹)₂, N(R¹)₂, NR¹SO₂R², NR¹COR¹, (C₁-C₆)-Alkyl-S(O)ₙR², (C₁-C₆)-Alkyl-OR¹, (C₁-C₆)-Alkyl-OCOR¹, (C₁-C₆)-Alkyl-OSO₂R², (C₁-C₆)-Alkyl-CO₂R¹, (C₁-C₆)-Alkyl-SO₂OR¹, (C₁-C₆)-Alkyl-CON(R¹)₂, (C₁-C₆)-Alkyl-SO₂N(R¹)₂, (C₁-C₆)-Alkyl-NR¹COR¹, (C₁-C₆)-Alkyl-NR¹SO₂R², (C₁-C₆)-Alkyl-Phenyl, (C₁-C₆)-Alkyl-Heteroaryl, (C₁-C₆)-Alkyl-Heterocyclyl, Phenyl, Heteroaryl oder Heterocyclyl, wobei die sechs letztgenannten Reste jeweils durch s Reste aus der Gruppe bestehend Halogen, Nitro, Cyano, (C₁-C₆)-Alkyl, Halogen-(C₁-C₆)-alkyl, (C₃-C₆)-Cycloalkyl, S(O)ₙ-(C₁-C₆)-Alkyl, (C₁-C₆)-Alkoxy, Halogen-(C₁-C₆)-alkoxy, (C₁-C₆)-Alkoxy-(C₁-C₄)-alkyl und Cyanomethyl substituiert sind, und wobei Heterocyclyl n Oxogruppen trägt,
- Z: bedeutet Halogen, Cyano, Rhodano, Halogen-(C₁-C₆)-alkyl, (C₂-C₆)-Alkenyl, Halogen-(C₂-C₆)-alkenyl, (C₂-C₆)-Alkinyl, Halogen-(C₃-C₆)-alkinyl, (C₃-C₆)-Cycloalkyl, Halogen-(C₃-C₆)-cycloalkyl, (C₃-C₆)-Cycloalkyl-(C₁-C₆)-alkyl, Halogen-(C₃-C₆)-cycloalkyl-(C₁-C₆)-alkyl, COR¹, COOR¹, C(O)N(R¹)₂, C(O)NR¹OR¹, OSO₂R², S(O)ₙR², SO₂OR¹, SO₂N(R¹)₂, NR¹SO₂R², NR¹COR¹, (C₁-C₆)-Alkyl-S(O)ₙR², (C₁-C₆)-Alkyl-OR¹, (C₁-C₆)-Alkyl-OCOR¹, (C₁-C₆)-Alkyl-OSO₂R², (C₁-C₆)-Alkyl-CO₂R¹, (C₁-C₆)-Alkyl-SO₂OR¹, (C₁-C₆)-Alkyl-CON(R¹)₂, (C₁-C₆)-Alkyl-SO₂N(R¹)₂, (C₁-C₆)-Alkyl-NR¹COR¹, (C₁-C₆)-Alkyl-NR¹SO₂R², 1,2,4-Triazol-1-yl, oder
Z kann auch Wasserstoff, (C₁-C₆)-Alkyl oder (C₁-C₆)-Alkoxy bedeuten, falls Y für den Rest S(O)ₙR² steht,
- W: bedeutet Wasserstoff, (C₁-C₆)-Alkyl, Halogen-(C₁-C₆)-alkyl, (C₁-C₆)-Alkoxy, (C₁-C₆)-Halogenalkoxy, S(O)ₙ-(C₁-C₆)-alkyl, S(O)ₙ-(C₁-C₆)-halogenalkyl, (C₁-C₆)-Alkoxy-(C₁-C₄)-alkyl, Halogen, Nitro oder Cyano,
- R: bedeutet (C₁-C₈)-Alkyl, Halogen-(C₁-C₈)-alkyl, (C₂-C₈)-Alkenyl, Halogen-(C₂-C₈)-alkenyl, (C₂-C₈)-Alkinyl, Halogen-(C₂-C₈)-alkinyl, wobei diese sechs vorstehend genannten Reste jeweils durch s Reste aus der Gruppe bestehend aus Nitro, Cyano, SiR⁵₃, P(OR⁵)₃, S(O)ₙ-(C₁-C₆)-Alkyl, (C₁-C₆)-Alkoxy, Halogen-(C₁-C₆)-alkoxy, N(R³)₂, COR³, COOR³, OCOR³, NR³COR³, NR³SO₂R⁴, (C₃-C₆)-Cycloalkyl, Heteroaryl, Heterocyclyl, Phenyl, Q-Heteroaryl, Q-Heterocyclyl, Q-Phenyl und Q-Benzyl substituiert sind, wobei die sieben letztgenannten Reste jeweils durch s Reste aus der Gruppe bestehend aus Methyl, Ethyl, Methoxy, Trifluormethyl, Cyano und Halogen substituiert sind, und wobei Heterocyclyl n Oxogruppen trägt, oder
- R: bedeutet jeweils durch s Reste aus der Gruppe bestehend aus Halogen, Nitro, Cyano, (C₁-C₆)-Alkyl, Halogen-(C₁-C₆)-alkyl, (C₃-C₆)-Cycloalkyl, S(O)ₙ-(C₁-C₆)-Alkyl, (C₁-C₆)-Alkoxy, Halogen-(C₁-C₆)-alkoxy und (C₁-C₆)-Alkoxy-(C₁-C₄)-alkyl substituiertes (C₃-C₇)-Cycloalkyl, Heteroaryl, Heterocyclyl oder Phenyl,
- Q: bedeutet O, S, oder NR³,
- R¹: bedeutet Wasserstoff, (C₁-C₆)-Alkyl, (C₂-C₆)-Alkenyl, (C₂-C₆)-Alkinyl, (C₃-C₆)-Cycloalkyl, (C₃-C₆)-Cycloalkyl-(C₁-C₆)-alkyl, (C₁-C₆)-Alkyl-O-(C₁-C₆)-alkyl, Phenyl, Phenyl-(C₁-C₆)-alkyl, Heteroaryl, (C₁-C₆)-Alkyl-Heteroaryl, Heterocyclyl, (C₁-C₆)-Alkyl-Heterocyclyl, (C₁-C₆)-Alkyl-O-Heteroaryl, (C₁-C₆)-Alkyl-O-Heterocyclyl, (C₁-C₆)-Alkyl-NR³-Heteroaryl oder (C₁-C₆)-Alkyl-NR³-Heterocyclyl, wobei die sechzehn letztgenannten Reste jeweils durch s Reste aus der Gruppe bestehend aus Cyano, Halogen, Nitro, OR³, S(O)ₙR⁴, N(R³)₂, NR³OR³, COR³, OCOR³, NR³COR³, NR³SO₂R⁴, CO₂R³, CON(R³)₂ und (C₁-C₄)-Alkoxy-(C₂-C₆)-alkoxycarbonyl substituiert sind, und wobei Heterocyclyl n Oxogruppen trägt,
- R²: bedeutet (C₁-C₆)-Alkyl, (C₂-C₆)-Alkenyl, (C₂-C₆)-Alkinyl, (C₃-C₆)-Cycloalkyl, (C₃-C₆)-Cycloalkyl-(C₁-C₆)-alkyl, (C₁-C₆)-Alkyl-O-(C₁-C₆)-alkyl, Phenyl, Phenyl-(C₁-C₆)-alkyl, Heteroaryl, (C₁-C₆)-Alkyl-Heteroaryl, Heterocyclyl, (C₁-C₆)-Alkyl-Heterocyclyl, (C₁-C₆)-Alkyl-O-Heteroaryl, (C₁-C₆)-Alkyl-O-Heterocyclyl, (C₁-C₆)-Alkyl-NR³-Heteroaryl oder (C₁-C₆)-Alkyl-NR³-Heterocyclyl, wobei diese sechzehn letztgenannten Reste jeweils durch s Reste aus der Gruppe bestehend aus Cyano, Halogen, Nitro, OR³, S(O)ₙR⁴, N(R³)₂, NR³OR³, NR³SO₂R⁴, COR³, OCOR³, NR³COR³, CO₂R³, CON(R³)₂ und (C₁-C₄)-Alkoxy-(C₂-C₆)-alkoxycarbonyl substituiert sind, und wobei Heterocyclyl n Oxogruppen trägt,
- R³: bedeutet Wasserstoff, (C₁-C₆)-Alkyl, (C₂-C₆)-Alkenyl, (C₂-C₆)-Alkinyl, (C₃-C₆)-Cycloalkyl oder (C₃-C₆)-Cycloalkyl-(C₁-C₆)-alkyl,
- R⁴: bedeutet (C₁-C₆)-Alkyl, (C₂-C₆)-Alkenyl oder (C₂-C₆)-Alkinyl,
- R⁵: bedeutet Methyl oder Ethyl,
- n: bedeutet 0, 1 oder 2, und
- s: bedeutet 0, 1, 2 oder 3.

Bevorzugt sind auch erfindungsgemäße Zusammensetzungen, die als Herbizid (A) solche Verbindungen der allgemeinen Formel (I) und deren Salze enthalten, worin
- A: bedeutet N oder CY,
- B: bedeutet N oder CH,
- X: bedeutet Nitro, Halogen, Cyano, (C₁-C₆)-Alkyl, Halogen-(C₁-C₆)-alkyl, (C₃-C₆)-Cycloalkyl, OR¹, S(O)ₙR², (C₁-C₆)-Alkyl-S(O)ₙR², (C₁-C₆)-Alkyl-OR¹, (C₁-C₆)-Alkyl-CON(R¹)₂, (C₁-C₆)-Alkyl-SO₂N(R¹)₂, (C₁-C₆)-Alkyl-NR¹COR¹, (C₁-C₆)-Alkyl-NR¹SO₂R², (C₁-C₆)-Alkyl-Heteroaryl, (C₁-C₆)-Alkyl-Heterocyclyl, wobei die beiden letzt genannten Reste jeweils durch s Reste Halogen, (C₁-C₆)-Alkyl, Halogen-(C₁-C₆)-alkyl, S(O)ₙ-(C₁-C₆)-Alkyl, (C₁-C₆)-Alkoxy und Halogen-(C₁-C₆)-alkoxy substituiert sind, und wobei Heterocyclyl n Oxogruppen trägt,
- Y: Wasserstoff, Nitro, Halogen, Cyano, (C₁-C₆)-Alkyl, (C₁-C₆)-Halogenalkyl, OR¹, S(O)ₙR², SO₂N(R¹)₂, N(R¹)₂, NR¹SO₂R², NR¹COR¹, (C₁-C₆)-Alkyl-S(O)ₙR², (C₁-C₆)-Alkyl-OR¹, (C₁-C₆)-Alkyl-CON(R¹)₂, (C₁-C₆)-Alkyl-SO₂N(R¹)₂, (C₁-C₆)-Alkyl-NR¹COR¹, (C₁-C₆)-Alkyl-NR¹SO₂R², (C₁-C₆)-Alkyl-Phenyl, (C₁-C₆)-Alkyl-Heteroaryl, (C₁-C₆)-Alkyl-Heterocyclyl, Phenyl, Heteroaryl oder Heterocyclyl, wobei die sechs letztgenannten Reste jeweils durch s Reste aus der Gruppe bestehend Halogen, Nitro, Cyano, (C₁-C₆)-Alkyl, Halogen-(C₁-C₆)-alkyl, (C₃-C₆)-Cycloalkyl, S(O)ₙ-(C₁-C₆)-Alkyl, (C₁-C₆)-Alkoxy, Halogen-(C₁-C₆)-alkoxy, (C₁-C₆)-Alkoxy-(C₁-C₄)-alkyl und Cyanomethyl substituiert sind, und wobei Heterocyclyl n Oxogruppen trägt,
- Z: bedeutet Halogen, Cyano, Halogen-(C₁-C₆)-alkyl, (C₃-C₆)-Cycloalkyl, S(O)ₙR², 1,2,4-Triazol-1-yl, oder
- Z: kann auch Wasserstoff, Methyl, Methoxy oder Ethoxy bedeuten, falls Y für den Rest S(O)ₙR² steht,
- W: bedeutet Wasserstoff, Methyl, Ethyl, Methoxymethyl, Methoxy, Fluor, Chlor oder S(O)ₙCH₃,
- R: bedeutet (C₁-C₈)-Alkyl, Halogen-(C₁-C₈)-alkyl, (C₂-C₈)-Alkenyl, Halogen-(C₂-C₈)-alkenyl, (C₂-C₈)-Alkinyl, Halogen-(C₂-C₈)-alkinyl, wobei diese sechs vorstehend genannten Reste jeweils durch s Reste aus der Gruppe bestehend aus Cyano, S(O)ₙ-(C₁-C₆)-Alkyl, (C₁-C₆)-Alkoxy, Halogen-(C₁-C₆)-alkoxy, COR³, COOR³, OCOR³, NR³COR³, NR³SO₂R⁴, (C₃-C₆)-Cycloalkyl, Heteroaryl, Heterocyclyl und Phenyl substituiert sind, wobei die drei letztgenannten Reste jeweils durch s Reste aus der Gruppe bestehend aus Methyl, Ethyl, Methoxy, Trifluormethyl, Cyano und Halogen substituiert sind, und wobei Heterocyclyl 0 bis 2 Oxogruppen trägt, oder
- R: bedeutet durch s Reste aus der Gruppe bestehend aus Halogen, Nitro, Cyano, (C₁-C₆)-Alkyl, Halogen-(C₁-C₆)-alkyl, (C₃-C₆)-Cycloalkyl, S(O)ₙ-(C₁-C₆)-Alkyl, (C₁-C₆)-Alkoxy, Halogen-(C₁-C₆)-alkoxy, (C₁-C₆)-Alkoxy-(C₁-C₄)-alkyl substituiertes Phenyl,
- R¹: bedeutet Wasserstoff, (C₁-C₆)-Alkyl, (C₂-C₆)-Alkenyl, (C₂-C₆)-Alkinyl, (C₃-C₆)-Cycloalkyl, (C₃-C₆)-Cycloalkyl-(C₁-C₆)-alkyl, (C₁-C₆)-Alkyl-O-(C₁-C₆)-alkyl, Phenyl, Phenyl-(C₁-C₆)-alkyl, Heteroaryl, (C₁-C₆)-Alkyl-Heteroaryl, Heterocyclyl, (C₁-C₆)-Alkyl-Heterocyclyl, (C₁-C₆)-Alkyl-O-Heteroaryl, (C₁-C₆)-Alkyl-O-Heterocyclyl, (C₁-C₆)-Alkyl-NR³-Heteroaryl oder (C₁-C₆)-Alkyl-NR³-Heterocyclyl, wobei die sechzehn letztgenannten Reste jeweils durch s Reste aus der Gruppe bestehend aus Cyano, Halogen, Nitro, OR³, S(O)ₙR⁴, N(R³)₂, NR³OR³, COR³, OCOR³, NR³COR³, NR³SO₂R⁴, CO₂R³, CON(R³)₂ und (C₁-C₄)-Alkoxy-(C₂-C₆)-alkoxycarbonyl substituiert sind, und wobei Heterocyclyl n Oxogruppen trägt,
- R²: bedeutet jeweils durch s Reste aus der Gruppe bestehend aus Halogen und OR³ substituiertes (C₁-C₆)-Alkyl, (C₃-C₆)-Cycloalkyl oder (C₃-C₆)-Cycloalkyl-(C₁-C₆)-alkyl,
- R³: bedeutet Wasserstoff oder (C₁-C₆)-Alkyl,
- R⁴: bedeutet (C₁-C₆)-Alkyl,
- R⁵: bedeutet Methyl oder Ethyl,
- n: bedeutet 0, 1 oder 2, und
- s: bedeutet 0, 1, 2 oder 3.

Besonders bevorzugt sind solche erfindungsgemäße Zusammensetzungen, die als Herbizid (A) Verbindungen der allgemeinen Formel (I) und deren Salze enthalten, worin
- A: bedeutet CY,
- B: bedeutet N,
- X: bedeutet Chlor, Methyl, Ethyl, Propyl, cyclo-Propyl, Methoxy oder SO₂CH₃,
- Y: bedeutet Wasserstoff, CH₂OCH₃, CH₂OCH₂CF₃, CH₂OC₂H₄OCH₃, 4,5-Dihydro-1,2-oxazol-3-yl, 5-Methoxymethy-4,5-dihydro-1,2-oxazol-3-yl, Pyrazol-1-yl, OMe, OEt, OPr, OiBu, OCH₂cPr, OC₂H₄OCH₃, SO₂CH₃, S(O)CH₃ oder SCH₃, SO₂Et, S(O)Et
oder SEt,
- Z: bedeutet Trifluormethyl, SO₂CH₃, SO₂Et, Chlor oder Brom,
- W: bedeutet Wasserstoff, und
- R: bedeutet Methyl, Ethyl, Propyl oder Methoxyethyl.

Ganz besonders bevorzugt sind erfindungsgemäße Zusammen-setzungen, die als Herbizid (A) solche Verbindungen der allgemeinen Formel (I) und deren Salze enthalten, worin
- A: bedeutet CY,
- B: bedeutet N,
- X: bedeutet Chlor,
- Y: SO₂CH₃, SOCH₃ oder SO₂Et,
- Z: bedeutet Wasserstoff oder Methyl,
- W: bedeutet Wasserstoff, und
- R: bedeutet Methyl.

Ganz besonders bevorzugt sind auch erfindungsgemäße Zusammen-setzungen, die als Herbizid (A) solche Verbindungen der allgemeinen Formel (I) und deren Salze enthalten, worin
- A: bedeutet CY,
- B: bedeutet N
- X: bedeutet Chlor oder Brom,
- Y: bedeutet Wasserstoff, Methyl, SO₂CH₃ oder SCH₃,
- Z: bedeutet Wasserstoff, SO₂CH₃ oder SCH₃,
- W: bedeutet Methyl, und
- R: bedeutet Methyl oder Ethyl.

Ganz besonders bevorzugt sind auch solche erfindungsgemäße Zusammensetzungen, die als Herbizid (A) Verbindungen der allgemeinen Formel (I) und deren Salze enthalten, worin
- A: bedeutet CY,
- B: bedeutet CH,
- X: bedeutet Chlor oder Methyl,
- Y: bedeutet 4,5-Dihydro-1,2-oxazol-3-yl, Pyrazol-1-yl, OC₂H₄OCH₃ oder SO₂CH₃,
- Z: bedeutet Trifluormethyl, SO₂CH₃, SO₂Et oder Chlor,
- W: bedeutet Wasserstoff, und
- R: bedeutet Methyl.

Ganz besonders bevorzugt sind auch erfindungsgemäße Zusammen-setzungen, die als Herbizid (A) solche Verbindungen der allgemeinen Formel (I) und deren Salze enthalten, worin
- A: bedeutet N,
- B: bedeutet N,
- X: bedeutet Chlor, Brom, SO₂CH₃, Methoxymethyl, OCH₂cPr, OC₂H₄OCH₃ oder Methyl,
- Z: bedeutet Trifluormethyl,
- W: bedeutet Wasserstoff, und
- R: bedeutet Methyl oder Ethyl.

In der Formel (I) und allen nachfolgenden Formeln können Alkylreste mit mehr als zwei Kohlenstoffatomen geradkettig oder verzweigt sein. Alkylreste bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl. Analog bedeutet Alkenyl z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl. Alkinyl bedeutet z.B. Propargyl, But-2-in-1-yl, But-3-in- 1-yl, 1-Methyl-but-3-in-1-yl. Die Mehrfachbindung kann sich jeweils in beliebiger Position des ungesättigten Rests befinden. Cycloalkyl bedeutet ein carbocyclisches, gesättigtes Ringsystem mit drei bis sechs C-Atomen, z.B. Cyclopropyl, Cyclobutyl, Cyclopentyl oder Cyclohexyl. Analog bedeutet Cycloalkenyl eine monocyclische Alkenylgruppe mit drei bis sechs Kohlenstoffringgliedern, z.B. Cyclopropenyl, Cyclobutenyl, Cyclopentenyl und Cyclohexenyl, wobei sich die Doppelbindung an beliebiger Position befinden kann.

Halogen steht für Fluor, Chlor, Brom oder lod.

Heterocyclyl bedeutet einen gesättigten, teilgesättigten oder vollständig ungesättigten cyclischen Rest, der 3 bis 6 Ringatome enthält, von denen 1 bis 4 aus der Gruppe Sauerstoff, Stickstoff und Schwefel stammen, und der zusätzlich durch einen Benzoring annelliert sein kann. Beispielsweise steht Heterocyclyl für Piperidinyl, Pyrrolidinyl, Tetrahydrofuranyl, Dihydrofuranyl und Oxetanyl,
Heteroaryl bedeutet einen aromatischen cyclischen Rest, der 3 bis 6 Ringatome enthält, von denen 1 bis 4 aus der Gruppe Sauerstoff, Stickstoff und Schwefel stammen, und der zusätzlich durch einen Benzoring annelliert sein kann. Heteroaryl steht beispielsweise für Benzimidazol-2-yl, Furanyl, Imidazolyl, Isoxazolyl, Isothiazolyl, Oxazolyl, Pyrazinyl, Pyrimidinyl, Pyridazinyl, Pyridinyl, Benzisoxazolyl, Thiazolyl, Pyrrolyl, Pyrazolyl, Thiophenyl, 1,2,3-Oxadiazolyl, 1,2,4-Oxadiazolyl, 1,2,5-Oxadiazolyl, 1,3,4-Oxadiazolyl, 1,2,4-Triazolyl, 1,2,3-Triazolyl, 1,2,5-Triazolyl, 1,3,4-Triazolyl, 1,2,4-Triazolyl, 1,2,4-Thiadiazolyl, 1,3,4-Thiadiazolyl, 1,2,3-Thiadiazolyl, 1,2,5-Thiadiazolyl, 2H-1,2,3,4-Tetrazolyl, 1 H-1,2,3,4-Tetrazolyl, 1,2,3,4-Oxatriazolyl, 1,2,3,5-Oxatriazolyl, 1,2,3,4-Thiatriazolyl und 1,2,3,5-Thiatriazolyl.

Ist eine Gruppe mehrfach durch Reste substituiert, so ist darunter zu verstehen, dass diese Gruppe durch ein oder mehrere gleiche oder verschiedene der genannten Reste substituiert ist. Analoges gilt für den Aufbau von Ringsystemen durch verschiedene Atome und Elemente. Dabei sollen solche Verbindungen vom Anspruchsbegehren ausgenommen sein, von denen der Fachmann weiß, dass sie unter Normalbedingungen chemisch instabil sind.

Gegenstand der vorliegenden Erfindung sind auch herbizide Zusammensetzungen, umfassend Stereoisomere und deren Gemische, die von Formel (I) oder von den Formeln der Komponente B umfasst sind. Solche Verbindungen der Formel (I) oder der Formeln der Komponente B enthalten beispielsweise ein oder mehrere asymmetrisch substituierte Kohlenstoff-Atome oder Sulfoxide. Die durch ihre spezifische Raumform definierten möglichen Stereoisomeren, wie Enantiomere und Diastereomere, sind alle von der Formel (I) oder von den Komponenten (B) und (C) umfasst; insbesondere auch die racemischen Gemische und - soweit Enantiomere möglich sind - beide Enantiomere und insbesondere das jeweils biologisch wirksame Enantiomer. Die einzelnen Stereoisomeren können nach üblichen Methoden aus Gemischen der Stereoisomeren erhalten oder auch durch stereoselektive Reaktionen in Kombination mit dem Einsatz von stereochemisch reinen Ausgangs- oder Hilfsstoffen hergestellt werden.

Beispiele für als Herbizid (A) verwendete Verbindungen sind in den folgenden Tabellen aufgeführt:
Darin bedeuten die verwendeten Abkürzungen:

| | | | |
|---|---|---|---|
| Et = Ethyl | Me = Methyl | n-Pr = n-Propyl | i-Pr = Isopropyl |
| c-Pr = Cyclopropyl | Ph = Phenyl | Ac = Acetyl | i-Bu = Isobutyl |

**Tabelle 1: Verbindungen der allgemeinen Formel (I), worin A für CY und B für N und W für Wasserstoff steht**

| | | | | |
|---|---|---|---|---|
| 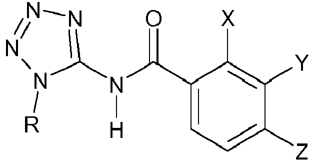 | | | | |

| Bsp.-Nr. | R | X | Y | Z |
|---|---|---|---|---|
| A1-1 | Me | Cl | H | SO₂Me |
| A1-2 | Me | SO₂Me | H | CF₃ |
| A1-3 | Me | Me | SMe | CF₃ |
| A1-4 | MeOC₂H₄ | Me | SMe | CF₃ |
| A1-5 | Me | Me | SOMe | CF₃ |
| A1-6 | Et | Me | SOMe | CF₃ |
| A1-7 | Me | Me | SO₂Me | CF₃ |
| A1-8 | Et | Me | SO₂Me | CF₃ |
| A1-9 | Pr | Me | SO₂Me | CF₃ |
| A1-10 | MeOC₂H₄ | Me | SO₂Me | CF₃ |
| A1-11 | Me | Me | SEt | CF₃ |
| A1-12 | Et | Me | SEt | CF₃ |
| A1-13 | Me | Me | SOEt | CF₃ |
| A1-14 | Et | Me | SOEt | CF₃ |
| A1-15 | Me | Me | SO₂Et | CF₃ |
| A1-16 | Et | Me | SO₂Et | CF₃ |
| A1-17 | Me | Me | SO₂Me | Cl |
| A1-18 | Me | Me | SEt | Cl |
| A1-19 | Me | Me | SOEt | Cl |
| A1-20 | Et | Me | SOEt | Cl |
| A1-21 | Me | Me | SO₂Et | Cl |
| A1-22 | Me | Me | SMe | Br |
| A1-23 | Me | Me | SEt | Br |
| A1-24 | Me | Me | 4,5-Dihydro-1,2-oxazol-3-yl | SO₂Me |
| A1-25 | Et | Me | 4,5-Dihydro-1,2-oxazol-3-yl | SO₂Me |
| A1-26 | Me | Me | Pyrazol-1-yl | SO₂Me |
| A1-27 | Et | Me | Pyrazol-1-yl | SO₂Me |
| A1-28 | Me | Me | SMe | SO₂Me |
| A1-29 | Me | Me | SO₂Me | SO₂Me |
| A1-30 | Et | Me | SO₂Me | SO₂Me |
| A1-31 | Me | Me | SO₂Et | SO₂Me |
| A1-32 | Et | Me | SO₂Et | SO₂Me |
| A1-33 | Me | Et | SMe | CF₃ |
| A1-34 | Me | Et | SOMe | CF₃ |
| A1-35 | Me | Et | SO₂Me | CF₃ |
| A1-36 | Me | Et | SMe | Cl |
| A1-37 | Et | Et | SMe | Cl |
| A1-38 | Me | Et | SOMe | Cl |
| A1-39 | Me | Et | SMe | Br |
| A1-40 | Me | Et | SO₂Me | Br |
| A1-41 | Me | Pr | SMe | CF₃ |
| A1-42 | Me | Pr | SOMe | CF₃ |
| A1-43 | Me | c-Pr | SMe | CF₃ |
| A1-44 | Me | OMe | SMe | CF₃ |
| A1-45 | Me | OMe | SOMe | CF₃ |
| A1-46 | Me | OMe | SO₂Me | CF₃ |
| A1-47 | Me | OMe | SEt | CF₃ |
| A1-48 | Me | Cl | SMe | H |
| A1-49 | Me | Cl | SO₂Me | Me |
| A1-50 | Me | Cl | SO₂Et | Me |
| A1-51 | Me | Cl | SO₂Me | CF₃ |
| A1-52 | Me | Cl | OC₂H₄OMe | Cl |
| A1-53 | Me | Cl | SMe | Cl |
| A1-54 | Et | Cl | SMe | Cl |
| A1-55 | Me | Cl | SOMe | Cl |
| A1-56 | Et | Cl | SOMe | Cl |
| A1-57 | Me | Cl | SO₂Me | Cl |
| A1-58 | Et | Cl | SO₂Me | Cl |
| A1-59 | Me | Cl | SO₂Et | Cl |
| A1-60 | Me | Cl | CH₂OMe | SO₂Me |
| A1-61 | Me | Cl | CH₂OCH₂CF₃ | SO₂Me |
| A1-62 | Et | Cl | CH₂OCH₂CF₃ | SO₂Me |
| A1-63 | Me | Cl | CH₂OC₂H₄OMe | SO₂Me |
| A1-64 | Me | Cl | 4,5-Dihydro-1,2-oxazol-3-yl | SO₂Me |
| A1-65 | Me | Cl | 4,5-Dihydro-1,2-oxazol-3-yl | SO₂Et |
| A1-66 | Me | Cl | 5-Methoxymethy-4,5-dihydro-1,2-oxazol-3-yl | SO₂Et |
| A1-67 | Me | Cl | OMe | SO₂Me |
| A1-68 | Me | Cl | OMe | SO₂Et |
| A1-69 | Me | Cl | OEt | SO₂Me |
| A1-70 | Me | Cl | OEt | SO₂Et |
| A1-71 | Me | Cl | OPr | SO₂Me |
| A1-72 | Me | Cl | OPr | SO₂Et |
| A1-73 | Me | Cl | Oi-Bu | SO₂Me |
| A1-74 | Me | Cl | OCH₂c-Pr | SO₂Me |
| A1-75 | Me | Cl | OCH₂c-Pr | SO₂Et |
| A1-76 | Me | Cl | OC₂H₄OMe | SO₂Me |
| A1-77 | Me | Cl | SMe | SO₂Me |
| A1-78 | Me | Me | OMe | SO₂Me |
| A1-79 | Et | OMe | SMe | CHF₂ |
| A1-80 | Me | OMe | SO₂Me | CHF₂ |
| A1-81 | Me | OMe | SMe | CHF₂ |
| A1-82 | Me | OMe | SOMe | CHF₂ |
| A1-83 | Me | Cl | O(CH₂)₃OMe | SO₂Et |
| A1-84 | Et | Cl | SOMe | Me |
| A1-85 | Me | Cl | SMe | CF₃ |

**Tabelle 2: Verbindungen der allgemeinen Formel (I), worin A für CY und B für CH und W für Wasserstoff steht**

| | | | | |
|---|---|---|---|---|
| 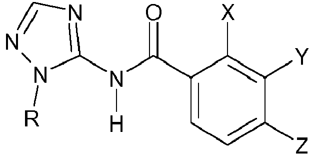 | | | | |

| Bsp.-Nr. | R | X | Y | Z |
|---|---|---|---|---|
| A2-1 | Me | Me | SO₂Me | CF₃ |
| A2-2 | Me | Me | 4,5-Dihydro-1,2-oxazol-3-yl | SO₂Me |
| A2-3 | Me | Me | Pyrazol-1-yl | SO₂Me |
| A2-4 | Me | Me | SO₂Me | SO₂Me |
| A2-5 | Me | Cl | SO₂Me | Cl |
| A2-6 | Me | Cl | 4,5-Dihydro-1,2-oxazol-3-yl | SO₂Me |
| A2-7 | Me | Cl | 4,5-Dihydro-1,2-oxazol-3-yl | SO₂Et |
| A2-8 | Me | Cl | OC₂H₄0Me | SO₂Me |
| A2-9 | Me | Cl | SO₂Me | CF₃ |
| A2-10 | Me | Cl | SO₂Et | CF₃ |

**Tabelle 3: Verbindungen der allgemeinen Formel (I), worin A für CY und B für N steht**

| | | | | | |
|---|---|---|---|---|---|
| 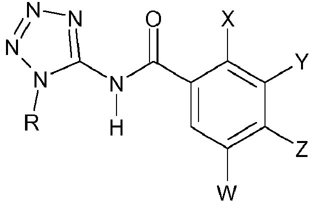 | | | | | |

| Bsp.-Nr. | R | X | Y | Z | W |
|---|---|---|---|---|---|
| A3-1 | Me | Cl | H | SMe | Me |
| A3-2 | Me | Cl | SMe | H | Me |
| A3-3 | Me | Cl | SO₂Me | H | Me |
| A3-4 | Et | Cl | SO₂Me | H | Me |
| A3-5 | Me | Cl | Me | SMe | Me |
| A3-6 | Et | Cl | Me | SO₂Me | Me |
| A3-7 | Me | Br | SO₂Me | H | Me |

**Tabelle 4: Verbindungen der allgemeinen Formel (I), worin A für N und B für N und W für Wasserstoff steht**

| | | | |
|---|---|---|---|
| 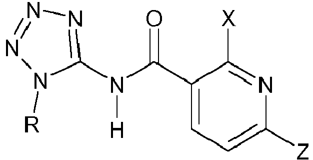 | | | |

| Bsp.-Nr. | R | X | Z |
|---|---|---|---|
| A4-1 | Me | Me | CF₃ |
| A4-2 | Me | CH₂OMe | CF₃ |
| A4-3 | Et | CH₂OMe | CF₃ |
| A4-4 | Me | CH₂OC₂H₄OMe | CF₃ |
| A4-5 | Et | CH₂OC₂H₄OMe | CF₃ |
| A4-6 | Me | CH₂OCH₂c-Pr | CF₃ |
| A4-7 | Me | Cl | CF₃ |
| A4-8 | Me | Br | CF₃ |
| A4-9 | Me | SO₂Me | CF₃ |

Bevorzugte Herbizide der Gruppe B1 sind clethodim, sethoxydim, tepraloxydim, mesotrione, sulcotrione, tefuryltrione, tembotrione, bicyclopyrone, pinoxaden, tralkoxydim.
Besonders bevorzugte Herbizide der Gruppe B1 sind clethodim, sulcotrione, tefuryltrione, tembotrione, bicyclopyrone, pinoxaden.

Bevorzugte Herbizide der Gruppe B2 sind dimethenamide, dimethenamide-P, napropamide, pethoxamid, propyzamide, diflufenican, flufenacet, mefenacet, picolinafen, propanil, acetochlor, alachlor, butachlor, metazachlor, metolachlor, S-metolachlor, pretilachlor, thenylchlor, asulam, carbetamide, desmedipham, phenmedipham, esprocarb, molinate, prosulfocarb, thiobencarb, amidosulfuron, chlorimuron-ethyl, cyclosulfamuron, ethoxysulfuron, flupyrsulfuron-methyl-sodium, foramsulfuron, iodosulfuron-methyl-sodium, mesosulfuron-methyl, nicosulfuron, orthosulfamuron, prosulfuron, pyrazosulfuron-ethyl, rimsulfuron, trifloxysulfuron (sodium), flucarbazone-sodium, propoxycarbazone-sodium, thiencarbazone-methyl, florasulam, metosulam, penoxsulam, metsulfuron-methyl, sulfosulfuron, thifensulfuron-methyl, tribenuron-methyl, tritosulfuron, pyroxsulam.
Besonders bevorzugte Herbizide der Gruppe B2 sind dimethenamide-P, napropamide, diflufenican, flufenacet, mefenacet, acetochlor, metazachlor, S-metolachlor, asulam, desmedipham, phenmedipham, molinate, prosulfocarb, amidosulfuron, ethoxysulfuron, foramsulfuron, iodosulfuron-methyl-sodium, mesosulfuron-methyl, flucarbazone-sodium, propoxycarbazone-sodium, thiencarbazone-methyl, florasulam, metosulam, metsulfuron-methyl, sulfosulfuron, thifensulfuron-methyl, tribenuron-methyl, tritosulfuron, pyroxsulam.

Bevorzugte Herbizide der Gruppe B3 sind bromoxynil und ioxynil.

Bevorzugte Herbizide der Gruppe B4 sind benzofenap, topramezone, pyrasulfotole, isoxaflutole, imazamox, imazethapyr, oxadiargyl, oxadiazon, amicarbazone, carfentrazone-ethyl, sulfentrazone, uniconazole, cafenstrole, fentrazamide, 3-(3-chloro-5-{[1-methyl-3-(trifl uormethyl)-1H-pyrazol-5-yl]oxy}phenoxy)-1-methyl-5-(trifluormethyl)-1H-pyrazole, 3-(3-iodo-5-{[1-methyl-3-(trifluormethyl)-1H-pyrazol-5-yl]oxy}phenoxy)-1-methyl-5-(trifluormethyl)-1H-pyrazole, 1-ethyl-3-(3-fluoro-5-{[1-methyl-3-(trifluormethyl)-1H-pyrazol-5-yl]oxy}phenoxy)-5-(trifluormethyl)-1H-pyrazole, pyraflufen-ethyl.

Besonders bevorzugte Herbizide der Gruppe B4 sind pyrasulfotole, isoxaflutole, oxadiargyl, oxadiazon, amicarbazone, fentrazamide, 3-(3-chloro-5-{[1-methyl-3-(trifluormethyl)-1H-pyrazol-5-yl]oxy}phenoxy)-1-methyl-5-(trifluormethyl)-1H-pyrazole, 3-(3-iodo-5-{[1-methyl-3-(trifluormethyl)-1H-pyrazol-5-yl]oxy}phenoxy)-1-methyl-5-(trifluormethyl)-1H-pyrazole,1-ethyl-3-(3-fluoro-5-{[1-methyl-3-(trifluormethyl)-1H-pyrazol-5-yl]oxy}phenoxy)-5-(trifluormethyl)-1H-pyrazole, pyraflufen-ethyl, imazamox.

Bevorzugte Herbizide der Gruppe B5 sind aminopyralid, benazolin, benfuresate, bentazone, cinidon-ethyl, clomazone, diquat dibromide, ethofumesate, flumiclorac-pentyl, flumioxazin, flurtamone, oxaziclomefone, pendimethalin, pyridate und trifluralin. Besonders bevorzugte Herbizide der Gruppe B5 sind aminopyralid, benfuresate, ethofumesate, flurtamone und oxaziclomefone.

Bevorzugte Herbizide der Gruppe B6 sind dicamba, clopyralid, fluroxypyr, picloram, triclopyr, quinclorac.

Bevorzugte Herbizide der Gruppe B7 sind anilofos, glufosinate-ammonium und L-glufosinate-ammonium, glyphosate, glyphosate-isopropyl-ammonium, glyphosate-ammonium, glyphosate-trimesium (=sulfosate), glyphosate-diammonium, glyphosate-potassium.

Bevorzugte Herbizide der Gruppe B8 sind acifluorfen-sodium, aclonifen, fluoroglycofen-ethyl, oxyfluorfen, bifenox, dichlorprop-P, mecoprop-P, 2,4-D, MCPA, clodinafop-propargyl, cyhalofop-butyl, diclofop-methyl, diclofop-P-methyl, fenoxaprop-P-ethyl, fluazifop-P-butyl, quizalofop-P.
Besonders bevorzugte Herbizide der Gruppe B8 sind aclonifen, diclofop-methyl, diclofop-P-methyl, fenoxaprop-P-ethyl, MCPA, 2,4-D, clodinafop-ethyl.

Besonders bevorzugte Herbizide der Gruppe B9 sind bispyribac (sodium), pyriftalid, bromacil, lenacil, 2-chloro-4-fluoro-5-[3-methyl-2,6-dioxo-4-(trifluoromethyl)-3,6-dihydropyrimidin-1(2H)-yl]-N-[methyl(1-methylethyl)-sulfamoyl]benzamide,

Bevorzugte Herbizide der Gruppe B9 sind bispyribac (sodium), bromacil.
Bevorzugte Herbizide der Gruppe B10 sind cumyluron, daimuron, diuron, isoproturon, diflufenzopyr.

Bevorzugte Herbizide der Gruppe B11 sind atrazine, simazine, terbuthylazine, ametryn, terbutryn, metamitron, metribuzin.
Besonders bevorzugte Herbizide der Gruppe B11 sind metamitron, metribuzin, terbuthylazine.

In den erfindungsgemäßen herbiziden Zusammensetzungen beträgt die Aufwandmenge der Herbizide der allgemeinen Formel (I) (Komponente A) üblicherweise 1 bis 500 g Aktivsusbstanz (a. i.) pro Hektar, bevorzugt 2 bis 300 g a. i./ha, insbesondere bevorzugt 3 bis 200 g a. i./ha. Die Aufwandmenge der Herbizide der Komponente B beträgt üblicherweise 1 bis 5000 g Aktivsusbstanz pro Hektar, bevorzugt 2 bis 3000 g a. i./ha, insbesondere bevorzugt 3 bis 2000 g a. i./ha. Die Aufwandmenge der Safener der Komponente C beträgt üblicherweise 1 bis 500 g Aktivsusbstanz pro Hektar, bevorzugt 2 bis 400 g a. i./ha, insbesondere bevorzugt 3 bis 300 g a. i./ha.

Bei Anwendung der erfindungsgemäßen herbiziden Zusammensetzungen wird im Vor- und Nachauflaufverfahren ein sehr breites Spektrum an Schadpflanzen bekämpft, z.B. annuellen und perennierenden mono- oder dikotylen Unkräutern sowie an unerwünschten Kulturpflanzen. Die erfindungsgemäßen herbiziden Zusammensetzungen eignen sich besonders zum Einsatz in Kulturen wie Getreide, Mais, Reis, Soja, Raps, Zuckerrüben, Baumwolle, Zuckerrohr sowie für den Einsatz in Dauerkulturen, Plantagen und auf Nichtkulturland. Ebenso eigenen sie sich sehr gut für den Einsatz in transgenen Kulturen von Mais, Getreide, Zuckerrüben , Reis, Baumwolle sowie Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, sowie Dauer- und Plantagenkulturen wie Kern- und Steinobst, Beerenobst, Wein, Hevea, Bananen, Zuckerrohr, Kaffee, Tee, Citrus, Nussplantagen, Rasen, Palmenkulturen und Forstkulturen. Für die Anwendung der erfindungsgemäßen Herbizid-Safener-Kombinationen (A)+(B) sind diese Kulturen ebenfalls bevorzugt, besonders bevorzugt ist der Einsatz in Getreide (z.B. Weizen, Gerste, Roggen, Hafer), Reis, Mais, Hirse, Zuckerrübe, Zuckerrohr, Sonnenblume, Raps und Baumwolle. Die Herbizid-Safener-Kombinationen (A)+(B) sind auch einsetzbar in toleranten und nicht toleranten Mutantenkulturen und toleranten und nicht toleranten transgenen Kulturen, vorzugsweise von Mais, Reis, Getreide, Raps, Baumwolle, Zuckerrüben und Soja, z.B. solche die gegen Imidazolinon-Herbizide, Atrazin, Glufosinate, Glyphosate, 2,4 D, Dicamba sowie Herbiziden aus der Gruppe der Inhibitoren der Hydroxyphenylpyruvat-Dioxygenase, wie sulcotrione, mesotrione, tembotrione, tefuryltrione, benzobicyclon, bicyclopyrone und ketospiradox resistent sind.

Herbizid wirksame Menge bedeutet im Sinne der Erfindung eine Menge an einem oder mehreren Herbiziden, die geeignet ist, den Pflanzenwuchs negativ zu beeinflussen. Antidotisch wirksame Menge bedeutet im Sinne der Erfindung eine Menge an einem oder mehreren Safenern, die geeignet ist, die phytotoxische Wirkung von Pflanzenschutzmittelwirkstoffen (z.B. von Herbiziden) an Kulturpflanzen zu reduzieren.

Die in den erfindungsgemäßen herbiziden Zusammensetzungen enthaltenen Safener (C) können je nach ihren Eigenschaften auch zur Vorbehandlung des Saatgutes der Kulturpflanze (z.B. zur Beizung des Saatguts) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche (einschließlich eventuell auf der Anbaufläche befindlichen Wassers, z.B. bei Reisapplikationen) vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

In einer bevorzugten Ausführungsform werden das Saatgut (z.B. Körner, Samen oder vegetative Vermehrungsorgane wie Knollen oder Sprossteile mit Knospen) oder Setzlinge mit den Safenern (C), gegebenenfalls in Kombination mit anderen agrochemischen Wirkstoffen, vorbehandelt. Zur Vorbehandlung des Saatguts können die Wirkstoffe z.B. durch Beizung an das Saatgut gebracht oder die Wirkstoffe und das Saatgut können in Wasser oder andere Lösungsmittel gegeben, und die Wirkstoffe z.B. durch Anlagerung oder Diffusion im Tauchverfahren oder durch Quellen oder Vorkeimen aufgenommen werden. Zur Vorbehandlung von Setzlingen können die jungen Pflanzen z.B. durch Spritzen, Tauchen oder Gießen mit den Safenern, gegebenenfalls in Kombination mit anderen agrochemischen Wirkstoffen, in Kontakt gebracht und anschließend verpflanzt und gegebenenfalls mit den Herbiziden (A) und (B) nachbehandelt werden.

Die Saatgut- oder Setzlingsbehandlung kann mit den Safenern (C) alleine oder gemeinsam mit anderen agrochemischen Wirkstoffen - wie Fungiziden, Insektiziden oder Mitteln zur Pflanzenstärkung, Düngung oder zur Beschleunigung der Quell- und Keimungsvorgänge - erfolgen. Dabei können die Safener nach der Vorbehandlungsanwendung anschließend nochmals vor, nach oder gemeinsam mit einem oder mehreren Herbiziden der Formel (I) (A) und Herbiziden (B) eventuell auch in Kombination mit anderen bekannten Herbiziden angewandt werden. Durch die Vorbehandlung des Saatguts oder der Setzlinge kann eine verbesserte Langzeitwirkung der Safener erzielt werden.

Gegenstand der vorliegenden Erfindung ist somit weiterhin ein Verfahren zur Bekämpfung von unerwünschten Pflanzen in Pflanzenkulturen, das dadurch gekennzeichnet ist, dass die Komponenten (A), (B) und gegebenenfalls (C) der erfindungsgemäßen herbiziden Zusammensetzungen auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche), ausgebracht werden, z.B. gemeinsam oder getrennt. Dabei können einer oder mehrere Safener (C), vor, nach oder gleichzeitig mit dem oder den Herbizid(en) der allgemeinen Formel (I) (A) und den Herbiziden (B) auf die Pflanzen, das Saatgut oder die Fläche, auf der die Pflanzen wachsen (z.B. die Anbaufläche), appliziert werden. In einer bevorzugten Ausführungsform werden die Safener (C) zur Saatgutbehandlung eingesetzt.

Unter unerwünschten Pflanzen sind alle Pflanzen zu verstehen, die an Orten wachsen, wo sie unerwünscht sind. Dies können z.B. Schadpflanzen (z.B. mono- oder dikotyle Unkräuter oder unerwünschte Kulturpflanzen) sein, z.B. auch solche, die gegen bestimmte herbizide Wirkstoffe wie Glyphosate, Atrazin, Glufosinate oder Imidazolinon-Herbizide resistent sind.

Monokotyle Unkräuter entstammen z.B. den Gattungen Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera. Dikotyle Unkräuter entstammen z.B. den Gattungen Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum, Euphorbia.

Gegenstand der Erfindung ist auch die Verwendung der erfindungsgemäßen herbiziden Zusammensetzungen zur Bekämpfung von unerwünschtem Pflanzenwuchs, vorzugsweise in Pflanzenkulturen.

Die erfindungsgemäßen herbiziden Zusammensetzungen können nach bekannten Verfahren z.B. als Mischformulierungen der Einzelkomponenten, gegebenenfalls mit weiteren Wirkstoffen, Zusatzstoffen und/oder üblichen Formulierungshilfsmitteln hergestellt werden, die dann in üblicher Weise mit Wasser verdünnt zur Anwendung gebracht werden, oder als sogenannte Tankmischungen durch gemeinsame Verdünnung der getrennt formulierten oder partiell getrennt formulierten Einzelkomponenten mit Wasser hergestellt werden. Ebenfalls möglich ist die zeitlich versetzte Anwendung (Splitapplikation) der getrennt formulierten oder partiell getrennt formulierten Einzelkomponenten. Möglich ist auch die Anwendung der Einzelkomponenten oder der herbiziden Zusammensetzungen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination. Die erfindungsgemäßen herbiziden Zusammensetzungen können auch zur Bekämpfung von Schadpflanzen in Kulturen von bekannten oder noch zu entwickelnden gentechnisch veränderten Pflanzen eingesetzt werden.

Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt. Weitere besondere Eigenschaften können in einer Toleranz oder Resistenz gegen abiotische Stressoren z. B. Hitze, Kälte, Trockenheit, Salz und ultraviolette Strahlung liegen.

Bevorzugt ist die Anwendung der erfindungsgemäßen herbiziden Zusammensetzungen in wirtschaftlich bedeutenden transgenen Kulturen von Nutz-und Zierpflanzen, z. B. von Getreide wie Weizen, Gerste, Roggen, Hafer, Hirse, Reis, Maniok und Mais oder auch Kulturen von Zuckerrübe, Baumwolle, Soja, Raps, Kartoffel, Tomate, Erbse und anderen Gemüsesorten.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche gegen bestimmte Herbizide vom Typ Glufosinate (vgl. z. B. EP-A-0242236, EP-A-242246) oder Glyphosate (WO 92/00377) oder der Sulfonylharnstoffe (EP-A-0257993, US-A-5013659) resistent sind,
- transgene Kulturpflanzen, beispielsweise Baumwolle, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).
- gentechnisch veränderte Kulturpflanzen mit neuen Inhalts- oder Sekundärstoffen z. B. neuen Phytoalexinen, die eine erhöhte Krankheitsresistenz verursachen (EPA 309862, EPA0464461)
- gentechnisch veränderte Pflanzen mit reduzierter Photorespiration, die höhere Erträge und höhere Stresstoleranz aufweisen (EPA 0305398).
- Transgene Kulturpflanzen, die pharmazeutisch oder diagnostisch wichtige Proteine produzieren ("molecular pharming")
- transgene Kulturpflanzen, die sich durch höhere Erträge oder bessere Qualität auszeichnen
- transgene Kulturpflanzen die sich durch eine Kombinationen z. B. der o. g. neuen Eigenschaften auszeichnen ("gene stacking")

Zahlreiche molekularbiologische Techniken, mit denen neue transgene Pflanzen mit veränderten Eigenschaften hergestellt werden können, sind im Prinzip bekannt; siehe z. B. I. Potrykus und G. Spangenberg (eds.) Gene Transfer to Plants, Springer Lab Manual (1995), Springer Verlag Berlin, Heidelberg. oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z. B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h., sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Vorzugsweise können die erfindungsgemäßen Zusammensetzungen in transgenen Kulturen eingesetzt werden, welche gegen Wuchsstoffe, wie z. B. Dicamba oder gegen Herbizide, die essentielle Pflanzenenzyme, z. B. Acetolactatsynthasen (ALS), EPSP Synthasen, Glutaminsynthasen (GS) oder Hydroxyphenylpyruvat Dioxygenasen (HPPD) hemmen, respektive gegen Herbizide aus der Gruppe der Sulfonylharnstoffe, der Glyphosate, Glufosinate oder Benzoylisoxazole und analogen Wirkstoffe, resistent sind.

Bei der Anwendung der erfindungsgemäßen Zusammensetzungen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung der erfindungsgemäßen Zusammensetzungen zur Bekämpfung von Schadpflanzen in transgenen Kulturpflanzen.

Bevorzugt ist die Anwendung der erfindungsgemäßen Zusammensetzungen in wirtschaftlich bedeutenden transgenen Kulturen von Nutz- und Zierpflanzen, z. B. von Getreide (z.B. Weizen, Gerste, Roggen, Hafer), Hirse, Reis, Maniok und Mais oder auch Kulturen von Zuckerrübe, Baumwolle, Soja, Raps, Kartoffel, Tomate, Erbse und anderen Gemüsekulturen.

Gegenstand der Erfindung ist deshalb auch die Verwendung der erfindungsgemäßen Zusammensetzungen zur Bekämpfung von Schadpflanzen in transgenen Kulturpflanzen oder Kulturpflanzen, die Toleranz durch Selektionszüchtung aufweisen. Die Herbizide (A), (B) und die Safener (C) können gemeinsam oder getrennt in übliche Formulierungen z.B. zur Sprüh-, Gieß-, Spritz- und Saatgutbeizanwendung übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen. Die Formulierungen können die üblichen Hilfs- und Zusatzstoffe enthalten.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel könne z.B. auch organische Lösungsmittel als Hilfslösungsmittel verwendet werden. Als flüssige Lösungsmittel kommen im wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formulierungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 Gew.-%.

Die Herbizide (A), (B) und die Safener (C) können als solche oder in ihren Formulierungen auch in Mischung mit anderen agrochemischen Wirkstoffen zur Bekämpfung von unerwünschtem Pflanzenwuchs, z.B. zur Unkrautbekämpfung oder zur Bekämpfung von unerwünschten Kulturpflanzen Verwendung finden, wobei z.B. Fertigformulierungen oder Tankmischungen möglich sind.

Auch Mischungen mit anderen bekannten Wirkstoffen wie Fungiziden, Insektiziden, Akariziden, Nematiziden, Schutzstoffen gegen Vogelfraß, Pflanzennährstoffen und Bodenstrukturverbesserungsmitteln sind möglich, ebenso mit im Pflanzenschutz üblichen Zusatzstoffen und Formulierungshilfsmitteln.

Die Herbizide (A), (B) und die Safener (C) können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht üblicherweise, z.B. durch Gießen, Spritzen, Sprühen, Streuen.

Die Wirkstoffe können auf die Pflanzen, Pflanzenteile, das Saatgut oder die Anbaufläche (Ackerboden) ausgebracht werden, vorzugsweise auf das Saatgut oder die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame Formulierung der erfindungsgemäßen Kombination an Wirkstoffen (A), (B) und (C) hat den Vorteil der leichteren Anwendbarkeit, weil die Mengen der Komponenten bereits im optimalen Verhältnis zueinander eingestellt werden können. Außerdem können die Hilfsmittel in der Formulierung aufeinander optimal abgestimmt werden.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

### Biologische Beispiele:

### - Testbedingungen im Gewächshausversuch

Die Unkrautsamen wurden in Töpfen (8 cm Durchmesser) mit einem sandigen Lehmboden ausgesät, unter optimalen Bedingungen zur Keimung gebracht. Die Herbizid-Anwendungen erfolgten im Nachauflauf auf die bewachsenen Töpfe mit einem Spritzvolumen von 300 l/ha. Die Herbizide wurden allein und in Kombination ausgebracht. Der Versuch wurde im Gewächshaus unter optimalen Wachstumsbedingungen durchgeführt. Die herbiziden Effekte wurden nach im Vergleich von nicht behandelten und behandelten Pflanzen visuell bewertet. Die prozentualen Werte bedeuten: 0 % = keine Effekte, 100 % = komplettes Absterben der Pflanzen). Die Prozentwerte werden genutzt, um Wechselwirkungen zwischen Einzelbehandlungen und Behandlung in Kombination nach S.R. Colby, Weeds 15, pages 20 to 22 (1967).zu errechnen.

Die Ergebnisse sind in den nachfolgenden Tabellen dargestellt.

### - Testbedingungen im Feldversuch

Die Versuche wurden im Freiland (Parzellenversuche, 10 qm pro Parzelle, 2 Wiederholungen, Spritzanwendung mit 200-300 Liter Wasser je Hektar) durchgeführt. Die Kulturen und Unkräuter/-gräser wurden unter üblichen Feldbedingungen ausgesät. Daneben stellte sich noch eine natürliche Unkrautflora ein. Die Anwendung erfolgte im Nachauflaufverfahren. Die Aufwandmengen der herbiziden Wirkstoffe bei alleiniger Applikation bzw. in Kombinationen sind ebenfalls den nachfolgenden Tabellen zu entnehmen. Die Auswertungen wurden durch visuelle Bonituren (0-100 % Skalierung) nach der Applikation im Vergleich der behandelten zu den unbehandelten Versuchvarianten vorgenommen. Die Ergebnisse (als Mittelwert über alle Pflanzen /Parzelle und über 2 Wiederholungen) sind in der nachfolgenden Tabelle berichtet.

### Saatgutbehandlung

Saatkörner von Kulturpflanzen wurden mit den als Suspensions- oder Emulsionskonzentraten formulierten Safenern und Wasser in Flaschen gemischt und gut geschüttelt, so dass die Saatkörner gleichmässig mit der Formulierung des jeweiligen Safeners beschichtet wurden. Die Saatkörner bzw. die aufgelaufenen Pflanzen wurden dann im Vorauflauf oder Nachauflaufverfahren mit Herbiziden behandelt. Dabei zeigten zahlreiche erfindungsgemäße Herbizid-Safener-Zusammensetzungen eine gute Verträglichkeit gegenüber den Kulturpflanzen bei gleichzeitig guter herbizider Wirkung gegen ein breites Spektrum von Schadpflanzen.

Die Abkürzungen bedeuten:

| | |
|---|---|
| a.i. | = active ingredient |
| E^{C} | = Erwartungswert nach Colby (E^{C} =A+B - AxB/100) |
| Δ | = Differenz (%) von gemessenem Wert zu Erwartungswert (%) ( gemessener Wert minus Erwartungswert) |

Bewertung :
- gemessener Wert E ist grösser als E^{C}: -> Synergismus (+Δ)
- gemessener Wert E ist gleich E^{C} : -> Additive Wirkung
- gemessener Wert E ist kleiner als E^{C}: -> Antagonismus(-Δ )

**Tabelle 5-01: Gewächshaus**

| Wirkstoff | Dosierung [g a.i./ha] | Wirkung [%] gegen Avena fatua |
|---|---|---|
| A1-2 | 2 | 0 |
| fenoxaprop-P-ethyl | 25 | 0 |
| A1-2 + fenoxaprop-P-ethyl | 2 + 25 | 15 (E^{C} = 0, Δ = 15) |

**Tabelle 5-02: Gewächshaus**

| Wirkstoff | Dosierung [g a.i./ha] | Wirkung [%] gegen Viola tricolor |
|---|---|---|
| A1-2 | 2 | 60 |
| fenoxaprop-P-ethyl | 25 | 0 |
| A1-2 + fenoxaprop-P-ethyl | 2 + 25 | 80 (E^{C} = 60, Δ = 20) |

**Tabelle 5-03: Gewächshaus**

| Wirkstoff | Dosierung [g a.i./ha] | Wirkung [%] gegen Phalaris minor |
|---|---|---|
| A1-2 | 2 | 0 |
| fenoxaprop-P-ethyl | 25 | 15 |
| A1-2 + fenoxaprop-P-ethyl | 2 + 25 | 30 (E^{C} = 15, Δ = 15) |

**Tabelle 5-04: Feld**

| Wirkstoff | Dosierung [g a.i./ha] | Wirkung [%] gegen Galium aparine |
|---|---|---|
| A1-2 | 25 | 70 |
| bromoxynil | 210 | 13 |
| A1-2 + bromoxynil | 25+210 | 100 (E^{C} = 74, Δ = 26) |

**Tabelle 5-05: Gewächshaus**

| Wirkstoff | Dosierung [g a.i./ha] | Wirkung [%] gegen Avena fatua |
|---|---|---|
| A1-7 | 3 | 0 |
| fenoxaprop-P-ethyl | 12.5 | 0 |
| A1-7 + fenoxaprop-P-ethyl | 3 + 12.5 | 20(E^{C}=0,A=20) |

**Tabelle 5-06: Gewächshaus**

| Wirkstoff | Dosierung [g a.i./ha] | Wirkung [%] gegen Papaver rhoeas |
|---|---|---|
| A1-7 | 3 | 60 |
| fenoxaprop-P-ethyl | 12.5 | 20 |
| A1-7 + fenoxaprop-P-ethyl | 3+25 | 85 (E^{C} = 68, Δ = 17) |

**Tabelle 5-07: Gewächshaus**

| Wirkstoff | Dosierung [g a.i./ha] | Wirkung [%] gegen Avena fatua |
|---|---|---|
| A1-7 | 3 | 0 |
| fenoxaprop-P-ethyl | 12.5 | 0 |
| A1-7 + fenoxaprop-P-ethyl | 3+25 | 10 (E^{C} = 0, Δ = 10) |

**Tabelle 5-08: Gewächshaus**

| Wirkstoff | Dosierung [g a.i./ha] | Wirkung [%] gegen Polygonum convolvulus |
|---|---|---|
| A1-7 | 3 | 10 |
| fenoxaprop-P-ethyl | 25 | 0 |
| A1-7 + fenoxaprop-P-ethyl | 3+25 | 20 (E^{C} = 10, Δ = 10) |

**Tabelle 5-09: Gewächshaus**

| Wirkstoff | Dosierung [g a.i./ha] | Wirkung [%] gegen Viola tricolor |
|---|---|---|
| A1-7 | 3 | 50 |
| fenoxaprop-P-ethyl | 12.5 | 15 |
| A1-7 + fenoxaprop-P-ethyl | 3 + 12.5 | 85 (E^{C} = 58, Δ = 28) |

**Tabelle 5-10: Feld**

| Wirkstoff | Dosierung [g a.i./ha] | Wirkung [%] gegen Sida spinosa |
|---|---|---|
| A1-9 | 10 | 60 |
| glufosinate-ammonium | 125 | 50 |
| A1-9 + glufosinate-ammonium | 10 + 125 | 95 (E^{C} = 80, Δ = 15) |

**Tabelle 5-11: Feld**

| Wirkstoff | Dosierung [g a.i./ha] | Wirkung [%] gegen Sida spinosa |
|---|---|---|
| A1-9 | 10 | 60 |
| glyphosate-potassium | 200 | 30 |
| A1-9 + glyphosate-potassium | 10+200 | 85 (E^{C} = 72, Δ = 13) |

**Tabelle 5-12: Feld**

| Wirkstoff | Dosierung [g a.i./ha] | Wirkung [%] gegen Cassia obtusifolia |
|---|---|---|
| A1-9 | 20 | 0 |
| glyphosate | 200 | 65 |
| A1-9 + glyphosate | 20 + 200 | 85 (E^{C} = 65, Δ = 20) |

**Tabelle 5-13: Feld**

| Wirkstoff | Dosierung [g a.i./ha] | Wirkung [%] gegen Portulaca oleracea |
|---|---|---|
| A1-9 | 20 | 43 |
| atrazine | 250 | 25 |
| A1-9 + atrazine | 20 + 250 | 100 (E^{C} = 57, Δ = 43) |

**Tabelle 5-14: Feld**

| Wirkstoff | Dosierung [g a.i./ha] | Wirkung [%] gegen Portulaca oleracea |
|---|---|---|
| A1-9 | 20 | 43 |
| foramsulfuron | 16 | 0 |
| A1-9 + foramsulfuron | 20 + 16 | 85 (E^{C} = 43, Δ = 42) |

**Tabelle 5-15: Feld**

| Wirkstoff | Dosierung [g a.i./ha] | Wirkung [%] gegen Portulaca oleracea |
|---|---|---|
| A1-9 | 20 | 43 |
| mesotrione | 25 | 0 |
| A1-9 + mesotrione | 20 + 25 | 70 (EC = 43, Δ = 27) |

**Tabelle 5-16: Feld**

| Wirkstoff | Dosierung [g a.i./ha] | Wirkung [%] gegen Portulaca oleracea |
|---|---|---|
| A1-9 | 20 | 43 |
| metribuzin | 50 | 0 |
| A1-9 + metribuzin | 20+50 | 75 (E^{C} = 43, Δ = 32) |

**Tabelle 5-17: Feld**

| Wirkstoff | Dosierung [g a.i./ha] | Wirkung [%] gegen Abutilon theophrasti |
|---|---|---|
| A1-9 | 20 | 78 |
| dimethenamide-P | 500 | 25 |
| A1-9 + dimethenamide-P | 20 + 500 | 85 (E^{C} = 79, Δ = 6) |

**Tabelle 5-18: Feld**

| Wirkstoff | Dosierung [g a.i./ha] | Wirkung [%] gegen Portulaca oleracea |
|---|---|---|
| A1-9 | 20 | 43 |
| bicyclopyrone | 25 | 23 |
| A1-9 + bicyclopyrone | 20 + 25 | 90 (E^{C} = 56, Δ = 34) |

**Tabelle 5-19: Feld**

| Wirkstoff | Dosierung [g a.i./ha] | Wirkung [%] gegen Portulaca oleracea |
|---|---|---|
| A1-9 | 20 | 43 |
| nicosulfuron | 20 | 30 |
| A1-9 + nicosulfuron | 20 + 20 | 68 (E^{C} = 60, Δ = 8) |

**Tabelle 5-20: Feld**

| Wirkstoff | Dosierung [g a.i./ha] | Wirkung [%] gegen Portulaca oleracea |
|---|---|---|
| A1-9 | 20 | 43 |
| rimsulfuron | 6 | 0 |
| A1-9 + rimsulfuron | 20+6 | 68 (E^{C} = 43, Δ = 25) |

**Tabelle 5-21: Feld**

| Wirkstoff | Dosierung [g a.i./ha] | Wirkung [%] gegen Sida spinosa |
|---|---|---|
| A1-9 | 10 | 60 |
| metribuzin | 50 | 25 |
| A1-9 + metribuzin | 10+50 | 79 (E^{C} = 60, Δ = 19) |

**Tabelle 5-22: Feld**

| Wirkstoff | Dosierung [g a.i./ha] | Wirkung [%] gegen Portulaca oleracea |
|---|---|---|
| A1-9 | 10 | 38 |
| aclonifen | 1200 | 0 |
| A1-9 + aclonifen | 10 + 1200 | 83 (E^{C} = 38, Δ = 45) |

**Tabelle 5-23: Feld**

| Wirkstoff | Dosierung [g a.i./ha] | Wirkung [%] gegen Setaria viridis |
|---|---|---|
| A1-9 | 10 | 15 |
| topramezone | 9 | 30 |
| A1-9 + topramezone | 10+9 | 75 (E^{C} = 40, Δ = 35) |

**Tabelle 5-24: Feld**

| Wirkstoff | Dosierung [g a.i./ha] | Wirkung [%] gegen Cassia obtusifolia |
|---|---|---|
| A1-9 | 20 | 0 |
| indaziflam | 25 | 65 |
| A1-9 + indaziflam | 20 + 25 | 83 (E^{C} = 65, Δ = 18) |

**Tabelle 5-25: Feld**

| Wirkstoff | Dosierung [g a.i./ha] | Wirkung [%] gegen Cassia obtusifolia |
|---|---|---|
| A1-9 | 25 | 65 |
| bromoxynil | 210 | 10 |
| A1-9 + bromoxynil | 25+210 | 90 (E^{C} = 69, Δ = 22) |

**Tabelle 5-26: Feld**

| Wirkstoff | Dosierung [g a.i./ha] | Wirkung [%] gegen Setaria viridis |
|---|---|---|
| A1-9 | 25 | 7 |
| MCPA | 280 | 0 |
| A1-9 + MCPA | 25 + 280 | 95 (E^{C} = 75, Δ = 20) |

**Tabelle 5-27: Gewächshaus**

| Wirkstoff | Dosierung [g a.i./ha] | Wirkung [%] gegen Setaria viridis |
|---|---|---|
| A1-23 | 2 | 50 |
| lenacil | 8 | 0 |
| A1-23 + lenacil | 2+8 | 60 (E^{C} = 50, Δ = 10) |

**Tabelle 5-28: Gewächshaus**

| Wirkstoff | Dosierung [g a.i./ha] | Wirkung [%] gegen Bidens pilosa |
|---|---|---|
| A1-23 | 2 | 45 |
| lenacil | 4 | 0 |
| A1-23 + lenacil | 2+4 | 70 (E^{C} = 45, Δ = 25) |

**Tabelle 5-29: Gewächshaus**

| Wirkstoff | Dosierung [g a.i./ha] | Wirkung [%] gegen Ambrosia artemisiifolia |
|---|---|---|
| A1-23 | 1 | 10 |
| lenacil | 16 | 0 |
| A1-23 + lenacil | 1 +16 | 45 (E^{C} = 10, Δ = 35) |

**Tabelle 5-30: Gewächshaus**

| Wirkstoff | Dosierung [g a.i./ha] | Wirkung [%] gegen Pharbitis purpurea |
|---|---|---|
| A1-23 | 1 | 45 |
| lenacil | 4 | 0 |
| A1-23 + lenacil | 1 + 4 | 75 (E^{C} = 45, Δ = 30) |

**Tabelle 5-31: Gewächshaus**

| Wirkstoff | Dosierung [g a.i./ha] | Wirkung [%] gegen Setaria viridis |
|---|---|---|
| A1-23 | 2 | 50 |
| lenacil | 8 | 0 |
| A1-23 + lenacil | 2+8 | 70 (E^{C} = 50, Δ = 20) |

**Tabelle 5-32: Gewächshaus**

| Wirkstoff | Dosierung [g a.i./ha] | Wirkung [%] gegen Ambrosia artemisiifolia |
|---|---|---|
| A1-23 | 1 | 0 |
| lenacil | 4 | 0 |
| A1-23 + lenacil | 1 + 4 | 25 (E^{C} = 0, Δ = 25) |

**Tabelle 5-33: Gewächshaus**

| Wirkstoff | Dosierung [g a.i./ha] | Wirkung [%] gegen Bidens pilosa |
|---|---|---|
| A1-23 | 1 | 35 |
| lenacil | 4 | 0 |
| A1-23 + lenacil | 1 + 4 | 65 (E^{C} = 35, Δ = 30) |

**Tabelle 5-34: Gewächshaus**

| Wirkstoff | Dosierung [g a.i./ha] | Wirkung [%] gegen Pharbitis purpurea |
|---|---|---|
| A1-23 | 2 | 45 |
| lenacil | 4 | 0 |
| A1-23 + lenacil | 2 + 4 | 75 (E^{C} = 45, Δ = 30) |

**Tabelle 5-35: Gewächshaus**

| Wirkstoff | Dosierung [g a.i./ha] | Wirkung [%] gegen Digitaria sanguinalis |
|---|---|---|
| A1-23 | 1 | 10 |
| lenacil | 4 | 0 |
| A1-23 + lenacil | 1 + 4 | 40 (E^{C} = 10, Δ = 30) |

**Tabelle 5-36: Gewächshaus**

| Wirkstoff | Dosierung [g a.i./ha] | Wirkung [%] gegen Digitaria sanguinalis |
|---|---|---|
| A1-24 | 6 | 50 |
| pendimethalin | 50 | 0 |
| A1-24 + pendimethalin | 6+50 | 80 (E^{C} = 50, Δ = 30) |

**Tabelle 5-37: Gewächshaus**

| Wirkstoff | Dosierung [g a.i./ha] | Wirkung [%] gegen Polygonum convolvulus |
|---|---|---|
| A1-24 | 6 | 0 |
| pendimethalin | 100 | 0 |
| A1-24 + pendimethalin | 6+100 | 30 (E^{C} = 0, Δ = 30) |

**Tabelle 5-38: Gewächshaus**

| Wirkstoff | Dosierung [g a.i./ha] | Wirkung [%] gegen Centaurea cyanis |
|---|---|---|
| A1-26 | 3 | 40 |
| pinoxaden | 5 | 0 |
| A1-26 + pinoxaden | 3+5 | 60 (E^{C} = 40, Δ = 20) |

**Tabelle 5-39: Gewächshaus**

| Wirkstoff | Dosierung [g a.i./ha] | Wirkung [%] gegen Papaver rhoeas |
|---|---|---|
| A1-26 | 6 | 50 |
| pinoxaden | 5 | 0 |
| A1-26 + pinoxaden | 6+5 | 70 (E^{C} = 50, Δ = 20) |

**Tabelle 5-40: Gewächshaus**

| Wirkstoff | Dosierung [g a.i./ha] | Wirkung [%] gegen Centaurea cyanis |
|---|---|---|
| A1-26 | 6 | 60 |
| pinoxaden | 5 | 15 |
| A1-26 + pinoxaden | 6+5 | 85 (E^{C} = 66, Δ = 19) |

**Tabelle 5-41: Gewächshaus**

| Wirkstoff | Dosierung [g a.i./ha] | Wirkung [%] gegen Papaver rhoeas |
|---|---|---|
| A1-26 | 3 | 30 |
| pinoxaden | 10 | 10 |
| A1-26 + pinoxaden | 3 + 10 | 60 (E^{C} = 37, Δ = 23) |

**Tabelle 5-42: Gewächshaus**

| Wirkstoff | Dosierung [g a.i./ha] | Wirkung [%] gegen Viola tricolor |
|---|---|---|
| A1-26 | 3 | 50 |
| pinoxaden | 10 | 0 |
| A1-26 + pinoxaden | 3 + 10 | 70 (E^{C} = 50, Δ = 15) |

**Tabelle 5-43: Gewächshaus**

| Wirkstoff | Dosierung [g a.i./ha] | Wirkung [%] gegen Setaria viridis |
|---|---|---|
| A1-33 | 2 | 75 |
| isoproturon | 200 | 10 |
| A1-33 + isoproturon | 2 + 200 | 95 (E^{C} = 78, Δ = 18) |

**Tabelle 5-44: Gewächshaus**

| Wirkstoff | Dosierung [g a.i./ha] | Wirkung [%] gegen Polygonum convolvulus |
|---|---|---|
| A1-33 | 4 | 0 |
| isoproturon | 200 | 0 |
| A1-33 + isoproturon | 4 + 200 | 20 (E^{C} = 0, Δ = 20) |

**Tabelle 5-45: Gewächshaus**

| Wirkstoff | Dosierung [g a.i./ha] | Wirkung [%] gegen Brachiaria platyphylla |
|---|---|---|
| A1-36 | 2 | 25 |
| imazamox | 2 | 10 |
| A1-36 + imazamox | 2 + 2 | 65 (E^{C} = 33, Δ = 32) |

**Tabelle 5-46: Gewächshaus**

| Wirkstoff | Dosierung [g a.i./ha] | Wirkung [%] gegen Bidens pilosa |
|---|---|---|
| A1-36 | 2 | 45 |
| imazamox | 1 | 10 |
| A1-36 + imazamox | 2 + 1 | 70 (E^{C} = 51, Δ = 19) |

**Tabelle 5-47: Gewächshaus**

| Wirkstoff | Dosierung [g a.i./ha] | Wirkung [%] gegen Bidens pilosa |
|---|---|---|
| A1-36 | 4 | 30 |
| imazamox | 2 | 20 |
| A1-36 + imazamox | 4 + 2 | 65 (E^{C} = 44, Δ = 21) |

**Tabelle 5-48: Feld**

| Wirkstoff | Dosierung [g a.i./ha] | Wirkung [%] gegen Amaranthus retroflexus |
|---|---|---|
| A1-36 | 50 | 0 |
| atrazine | 560 | 60 |
| A1-36 + atrazine | 50 + 560 | 92 (E^{C} = 60, Δ = 32) |

**Tabelle 5-49: Gewächshaus**

| Wirkstoff | Dosierung [g a.i./ha] | Wirkung [%] gegen Avena fatua |
|---|---|---|
| A1-44 | 4 | 0 |
| fenoxaprop-P-ethyl | 25 | 0 |
| A1-44 + fenoxaprop-P-ethyl | 4 + 25 | 15 (E^{C} = 0, Δ = 15) |

**Tabelle 5-50: Gewächshaus**

| Wirkstoff | Dosierung [g a.i./ha] | Wirkung [%] gegen Centaurea cyanis |
|---|---|---|
| A1-44 | 8 | 50 |
| fenoxaprop-P-ethyl | 25 | 0 |
| A1-44 + fenoxaprop-P-ethyl | 8 + 25 | 65 (E^{C} = 50, Δ = 15) |

**Tabelle 5-51: Feld**

| Wirkstoff | Dosierung [g a.i./ha] | Wirkung [%] gegen Euphorbia heterophylla |
|---|---|---|
| A1-44 | 25 | 58 |
| atrazine | 1000 | 49 |
| A1-44 + atrazine | 25 + 1000 | 94 (E^{C} = 70, Δ = 15) |

**Tabelle 5-52: Gewächshaus**

| Wirkstoff | Dosierung [g a.i./ha] | Wirkung [%] gegen Ambrosia artemisiifolia |
|---|---|---|
| A1-49 | 4 | 80 |
| th iencarbazone-methyl | 0.25 | 0 |
| A1-49 + thiencarbazone-methyl | 4 + 0.25 | 98 (E^{C} = 80, Δ = 18) |

**Tabelle 5-53: Feld**

| Wirkstoff | Dosierung [g a.i./ha] | Wirkung [%] gegen Polygunum convolvulus |
|---|---|---|
| A1-49 | 25 | 35 |
| bromoxynil | 210 | 30 |
| A1-49 + bromoxynil | 25 + 210 | 78 (E^{C} = 55, Δ = 24) |

**Tabelle 5-54: Feld**

| Wirkstoff | Dosierung [g a.i./ha] | Wirkung [%] gegen Lolium multiflorum |
|---|---|---|
| A1-49 | 25 | 40 |
| MCPA | 280 | 0 |
| A1-49 + MCPA | 25 + 280 | 60 (E^{C} = 40, Δ = 20) |

**Tabelle 5-55: Gewächshaus**

| Wirkstoff | Dosierung [g a.i./ha] | Wirkung [%] gegen Brachiaria platyphylla |
|---|---|---|
| A1-60 | 1 | 0 |
| lenacil | 4 | 0 |
| A1-60 + lenacil | 1 + 4 | 15 (E^{C} = 0, Δ = 15) |

**Tabelle 5-56: Gewächshaus**

| Wirkstoff | Dosierung [g a.i./ha] | Wirkung [%] gegen Xanthium strumarium |
|---|---|---|
| A1-60 | 1 | 25 |
| lenacil | 4 | 0 |
| A1-60 + lenacil | 1 + 4 | 55 (E^{C} = 25, Δ = 30) |

**Tabelle 5-57: Gewächshaus**

| Wirkstoff | Dosierung [g a.i./ha] | Wirkung [%] gegen Brachiaria platyphylla |
|---|---|---|
| A1-60 | 2 | 40 |
| lenacil | 4 | 0 |
| A1-60 + lenacil | 2 + 4 | 65 (E^{C} = 40, Δ = 25) |

**Tabelle 5-58: Feld**

| Wirkstoff | Dosierung [g a.i./ha] | Wirkung [%] gegen Lolium multiflorum |
|---|---|---|
| A1-60 | 25 | 15 |
| diflufenican | 120 | 10 |
| A1-60 + diflufenican | 25 + 120 | 50 (E^{C} = 24, Δ = 27) |

**Tabelle 5-59: Feld**

| Wirkstoff | Dosierung [g a.i./ha] | Wirkung [%] gegen Centaurea cyanis |
|---|---|---|
| A1-60 | 25 | 45 |
| flufenacet | 240 | 0 |
| A1-60 + flufenacet | 25 + 240 | 63 (E^{C} = 45, Δ = 18) |

**Tabelle 5-60: Feld**

| Wirkstoff | Dosierung [g a.i./ha] | Wirkung [%] gegen Alopecurus myosuroides |
|---|---|---|
| A1-60 | 25 | 15 |
| fenoxaprop-P-ethyl | 83 | 30 |
| A1-60 + fenoxaprop-P-ethyl | 25 + 83 | 60 (E^{C} = 41, Δ = 20) |

**Tabelle 5-61: Feld**

| Wirkstoff | Dosierung [g a.i./ha] | Wirkung [%] gegen Galium aparine |
|---|---|---|
| A1-60 | 25 | 30 |
| MCPA | 280 | 0 |
| A1-60 + MCPA | 25 +280 | 65 (E^{C} = 30, Δ = 35) |

**Tabelle 5-62: Feld**

| Wirkstoff | Dosierung [g a.i./ha] | Wirkung [%] gegen Galium aparine |
|---|---|---|
| A1-60 | 25 | 73 |
| bromoxynil | 210 | 13 |
| A1-60 + bromoxynil | 25 +210 | 100 (E^{C} = 77, Δ = 23) |

**Tabelle 5-63: Feld**

| Wirkstoff | Dosierung [g a.i./ha] | Wirkung [%] gegen Euphorbia heterophylla |
|---|---|---|
| A1-60 | 25 | 30 |
| atrazine | 1000 | 49 |
| A1-60 + atrazine | 25 +1000 | 91 (E^{C} = 64, Δ = 27) |

**Tabelle 5-64: Gewächshaus**

| Wirkstoff | Dosierung [g a.i./ha] | Wirkung [%] gegen Brachiaria platyphylla |
|---|---|---|
| A1-61 | 6 | 0 |
| dicamba | 25 | 10 |
| A1-61 + dicamba | 6+25 | 30 (E^{C} = 10, Δ = 20) |

**Tabelle 5-65: Gewächshaus**

| Wirkstoff | Dosierung [g a.i./ha] | Wirkung [%] gegen Setaria viridis |
|---|---|---|
| A1-61 | 3 | 0 |
| dicamba | 25 | 0 |
| A1-61 + dicamba | 3+25 | 15 (E^{C} = 0, Δ = 15) |

**Tabelle 5-66: Feld**

| Wirkstoff | Dosierung [g a.i./ha] | Wirkung [%] gegen Veronica hederifolia |
|---|---|---|
| A1-61 | 25 | 68 |
| bromoxynil | 210 | 5 |
| A1-61 + bromoxynil | 25 +210 | 99 (E^{C} = 70, Δ = 29) |

**Tabelle 5-67: Gewächshaus**

| Wirkstoff | Dosierung [g a.i./ha] | Wirkung [%] gegen Brachiaria platyphylla |
|---|---|---|
| A1-63 | 8 | 10 |
| lenacil | 800 | 0 |
| A1-63 + lenacil | 8 + 800 | 35 (E^{C} = 10, Δ = 25) |

**Tabelle 5-68: Gewächshaus**

| Wirkstoff | Dosierung [g a.i./ha] | Wirkung [%] gegen Digitaria sanguinalis |
|---|---|---|
| A1-63 | 8 | 45 |
| lenacil | 400 | 0 |
| A1-63 + lenacil | 8 + 400 | 80 (E^{C} = 45, Δ = 35) |

**Tabelle 5-69: Gewächshaus**

| Wirkstoff | Dosierung [g a.i./ha] | Wirkung [%] gegen Echinochloa crus-galli |
|---|---|---|
| A1-63 | 8 | 85 |
| lenacil | 400 | 0 |
| A1-63 + lenacil | 8 + 400 | 98 (E^{C} = 85, Δ = 13) |

**Tabelle 5-70: Gewächshaus**

| Wirkstoff | Dosierung [g a.i./ha] | Wirkung [%] gegen Setaria viridis |
|---|---|---|
| A1-63 | 4 | 50 |
| lenacil | 100 | 0 |
| A1-63 + lenacil | 4+100 | 75 (E^{C} = 50, Δ = 25) |

**Tabelle 5-71: Gewächshaus**

| Wirkstoff | Dosierung [g a.i./ha] | Wirkung [%] gegen Bidens pilosa |
|---|---|---|
| A1-63 | 8 | 50 |
| lenacil | 400 | 0 |
| A1-63 + lenacil | 8 + 400 | 85 (E^{C} = 50, Δ = 35) |

**Tabelle 5-72: Gewächshaus**

| Wirkstoff | Dosierung [g a.i./ha] | Wirkung [%] gegen Pharbitis purpurea |
|---|---|---|
| A1-63 | 4 | 35 |
| lenacil | 100 | 0 |
| A1-63 + lenacil | 4 + 100 | 55 (E^{C} = 35, Δ = 20) |

**Tabelle 5-73: Gewächshaus**

| Wirkstoff | Dosierung [g a.i./ha] | Wirkung [%] gegen Xanthium strumarium |
|---|---|---|
| A1-63 | 8 | 80 |
| lenacil | 400 | 0 |
| A1-63 + lenacil | 8 + 400 | 95 (E^{C} = 80, Δ = 15) |

**Tabelle 5-74: Feld**

| Wirkstoff | Dosierung [g a.i./ha] | Wirkung [%] gegen Veronica hederifolia |
|---|---|---|
| A1-63 | 25 | 68 |
| bromoxynil | 210 | 5 |
| A1-63 + bromoxynil | 25 + 210 | 93 (E^{C} = 70, Δ = 23) |

**Tabelle 5-75: Gewächshaus**

| Wirkstoff | Dosierung [g a.i./ha] | Wirkung [%] gegen Ambrosia artemisiifolia |
|---|---|---|
| A1-66 | 6 | 35 |
| th iencarbazone-methyl | 0.25 | 0 |
| A1-66 + thiencarbazone-methyl | 6 + 0.25 | 80 (E^{C} = 35, Δ = 45) |

**Tabelle 5-76: Feld**

| Wirkstoff | Dosierung [g a.i./ha] | Wirkung [%] gegen Veronica hederifolia |
|---|---|---|
| A1-66 | 25 | 75 |
| bromoxynil | 210 | 0 |
| A1-66 + bromoxynil | 25 +210 | 100 (E^{C} = 75, Δ = 25) |

**Tabelle 5-77: Gewächshaus**

| Wirkstoff | Dosierung [g a.i./ha] | Wirkung [%] gegen Xanthium strumarium |
|---|---|---|
| A1-67 | 4 | 0 |
| pendimethalin | 100 | 0 |
| A1-67 + pendimethalin | 4 + 100 | 20 (E^{C} = 0, Δ = 20) |

**Tabelle 5-78: Gewächshaus**

| Wirkstoff | Dosierung [g a.i./ha] | Wirkung [%] gegen Polygonum convolvulus |
|---|---|---|
| A1-67 | 4 | 10 |
| pendimethalin | 100 | 0 |
| A1-67 + pendimethalin | 4 + 100 | 30 (E^{C} = 10, Δ = 20) |

**Tabelle 5-79: Feld**

| Wirkstoff | Dosierung [g a.i./ha] | Wirkung [%] gegen Veronica hederifolia |
|---|---|---|
| A1-67 | 25 | 75 |
| bromoxynil | 210 | 5 |
| A1-67 + bromoxynil | 25 + 210 | 100 (E^{C} = 76, Δ = 24) |

**Tabelle 5-80: Feld**

| Wirkstoff | Dosierung [g a.i./ha] | Wirkung [%] gegen Setaria viridis |
|---|---|---|
| A1-67 | 25 | 65 |
| MCPA | 280 | 0 |
| A1-67 + MCPA | 25 + 280 | 83 (E^{C} = 65, Δ = 18) |

**Tabelle 5-81: Gewächshaus**

| Wirkstoff | Dosierung [g a.i./ha] | Wirkung [%] gegen Centaurea cyanis |
|---|---|---|
| A1-69 | 4 | 65 |
| isoproturon | 100 | 0 |
| A1-69 + isoproturon | 4 + 100 | 85 (E^{C} = 65, Δ = 20) |

**Tabelle 5-82: Gewächshaus**

| Wirkstoff | Dosierung [g a.i./ha] | Wirkung [%] gegen Papaver rhoeas |
|---|---|---|
| A1-69 | 4 | 10 |
| isoproturon | 200 | 40 |
| A1-69 + isoproturon | 4 + 200 | 80 (E^{C} = 46, Δ = 34) |

**Tabelle 5-83: Gewächshaus**

| Wirkstoff | Dosierung [g a.i./ha] | Wirkung [%] gegen Papaver rhoeas |
|---|---|---|
| A1-69 | 4 | 10 |
| isoproturon | 200 | 40 |
| A1-69 + isoproturon | 4 + 200 | 80 (E^{C} = 46, Δ = 34) |

**Tabelle 5-84: Gewächshaus**

| Wirkstoff | Dosierung [g a.i./ha] | Wirkung [%] gegen Polygonum convolvulus |
|---|---|---|
| A1-69 | 4 | 0 |
| isoproturon | 200 | 0 |
| A1-69 + isoproturon | 4 + 200 | 30 (E^{C} = 0, Δ = 30) |

**Tabelle 5-85: Feld**

| Wirkstoff | Dosierung [g a.i./ha] | Wirkung [%] gegen Euphorbia heterophylla |
|---|---|---|
| A1-69 | 25 | 20 |
| atrazine | 1000 | 49 |
| A1-69 + atrazine | 25 + 1000 | 89 (E^{C} = 59, Δ = 30) |

**Tabelle 5-86: Gewächshaus**

| Wirkstoff | Dosierung [g a.i./ha] | Wirkung [%] gegen Papaver rhoeas |
|---|---|---|
| A1-74 | 3 | 30 |
| pinoxaden | 10 | 0 |
| A1-74 + pinoxaden | 3+10 | 60 (E^{C} = 30, Δ = 30) |

**Tabelle 5-87: Gewächshaus**

| Wirkstoff | Dosierung [g a.i./ha] | Wirkung [%] gegen Papaver rhoeas |
|---|---|---|
| A1-74 | 3 | 40 |
| pinoxaden | 10 | 50 |
| A1-74 + pinoxaden | 3+10 | 90 (E^{C} = 70, Δ = 20) |

**Tabelle 5-88: Gewächshaus**

| Wirkstoff | Dosierung [g a.i./ha] | Wirkung [%] gegen Polygonum convolvulus |
|---|---|---|
| A1-74 | 3 | 0 |
| pinoxaden | 10 | 0 |
| A1-74 + pinoxaden | 3+10 | 30 (E^{C} = 0, Δ = 30) |

**Tabelle 5-89: Gewächshaus**

| Wirkstoff | Dosierung [g a.i./ha] | Wirkung [%] gegen Veronica hederifolia |
|---|---|---|
| A1-74 | 3 | 40 |
| pinoxaden | 10 | 20 |
| A1-74 + pinoxaden | 3+10 | 60 (E^{C} = 52, Δ = 8) |

**Tabelle 5-90: Gewächshaus**

| Wirkstoff | Dosierung [g a.i./ha] | Wirkung [%] gegen Bidens pilosa |
|---|---|---|
| A1-79 | 2 | 20 |
| imazamox | 1 | 10 |
| A1-79 + imazamox | 2 + 1 | 55 (E^{C} = 28, Δ = 27) |

**Tabelle 5-91: Gewächshaus**

| Wirkstoff | Dosierung [g a.i./ha] | Wirkung [%] gegen Ambrosia artemisiifolia |
|---|---|---|
| A1-79 | 2 | 30 |
| imazamox | 2 | 10 |
| A1-79 + imazamox | 2+2 | 70 (E^{C} = 37, Δ = 33) |

**Tabelle 5-92: Feld**

| Wirkstoff | Dosierung [g a.i./ha] | Wirkung [%] gegen Galium aparine |
|---|---|---|
| A1-79 | 25 | 70 |
| bromoxynil | 210 | 25 |
| A1-79 + bromoxynil | 25 +210 | 90 (E^{C} = 78, Δ = 12) |

**Tabelle 5-93: Gewächshaus**

| Wirkstoff | Dosierung [g a.i./ha] | Wirkung [%] gegen Ambrosia artemisiifolia |
|---|---|---|
| A1-80 | 1 | 25 |
| diflufenzopyr | 25 | 50 |
| A1-80 + diflufenzopyr | 1 + 25 | 85 (E^{C} = 63, Δ = 23) |

**Tabelle 5-94: Gewächshaus**

| Wirkstoff | Dosierung [g a.i./ha] | Wirkung [%] gegen Brachiaria platyphylla |
|---|---|---|
| A1-81 | 1 | 10 |
| dicamba | 12.5 | 0 |
| A1-81 + dicamba | 1 + 12.5 | 40 (E^{C} = 10, Δ = 30) |

**Tabelle 5-95: Gewächshaus**

| Wirkstoff | Dosierung [g a.i./ha] | Wirkung [%] gegen Echinochloa crus-galli |
|---|---|---|
| A1-81 | 1 | 10 |
| dicamba | 12.5 | 0 |
| A1-81 + dicamba | 1 + 12.5 | 40 (E^{C} = 10, Δ = 30) |

**Tabelle 5-96: Gewächshaus**

| Wirkstoff | Dosierung [g a.i./ha] | Wirkung [%] gegen Bidens pilosa |
|---|---|---|
| A1-83 | 1 | 35 |
| th iencarbazone-methyl | 0.5 | 40 |
| A1-83 + thiencarbazone-methyl | 1 + 0.5 | 75 (E^{C} = 61, Δ = 14) |

**Tabelle 5-97: Gewächshaus**

| Wirkstoff | Dosierung [g a.i./ha] | Wirkung [%] gegen Brachiaria platyphylla |
|---|---|---|
| A1-83 | 0.5 | 0 |
| th iencarbazone-methyl | 0.5 | 75 |
| A1-83 + thiencarbazone-methyl | 0.5 + 0.5 | 85 (E^{C} = 75, Δ = 10) |

**Tabelle 5-98: Gewächshaus**

| Wirkstoff | Dosierung [g a.i./ha] | Wirkung [%] gegen Pharbitis purpurea |
|---|---|---|
| A1-84 | 2 | 30 |
| imazamox | 1 | 15 |
| A1-84 + imazamox | 2 + 1 | 70 (E^{C} = 41, Δ = 30) |

**Tabelle 5-99: Gewächshaus**

| Wirkstoff | Dosierung [g a.i./ha] | Wirkung [%] gegen Xanthium strumarium |
|---|---|---|
| A1-84 | 1 | 10 |
| imazamox | 1 | 0 |
| A1-84 + imazamox | 1 + 1 | 40 (E^{C} = 10, Δ = 30) |

**Tabelle 5-100: Gewächshaus**

| Wirkstoff | Dosierung [g a.i./ha] | Wirkung [%] gegen Ambrosia artemisiifolia |
|---|---|---|
| A1-85 | 1 | 50 |
| imazamox | 1 | 0 |
| A1-85 + imazamox | 1 + 1 | 70 (E^{C} = 50, Δ = 20) |

**Tabelle 5-101: Gewächshaus**

| Wirkstoff | Dosierung [g a.i./ha] | Wirkung [%] gegen Xanthium strumarium |
|---|---|---|
| A1-85 | 1 | 25 |
| imazamox | 1 | 10 |
| A1-85 + imazamox | 1 + 1 | 50 (E^{C} = 33, Δ = 18) |

**Tabelle 5-102: Gewächshaus**

| Wirkstoff | Dosierung [g a.i./ha] | Wirkung [%] gegen Ambrosia artemisiifolia |
|---|---|---|
| A2-4 | 1 | 40 |
| imazamox | 2 | 0 |
| A2-4 + imazamox | 1 + 2 | 60 (E^{C} = 40, Δ = 20) |

**Tabelle 5-103: Gewächshaus**

| Wirkstoff | Dosierung [g a.i./ha] | Wirkung [%] gegen Xanthium strumarium |
|---|---|---|
| A2-4 | 2 | 10 |
| imazamox | 2 | 0 |
| A2-4 + imazamox | 2 + 2 | 35 (E^{C} = 10, Δ = 25) |

**Tabelle 5-104: Feld**

| Wirkstoff | Dosierung [g a.i./ha] | Wirkung [%] gegen Euphorbia heterophylla |
|---|---|---|
| A2-4 | 25 | 50 |
| atrazine | 1000 | 55 |
| A2-4 + atrazine | 25 + 1000 | 93 (E^{C} = 78, Δ = 16) |

**Tabelle 5-105: Gewächshaus**

| Wirkstoff | Dosierung [g a.i./ha] | Wirkung [%] gegen Brachiaria platyphylla |
|---|---|---|
| A2-9 | 1 | 0 |
| dicamba | 12.5 | 0 |
| A2-4 + imazamox | 1 + 12.5 | 15 (E^{C} = 0, Δ = 15) |

**Tabelle 5-106: Gewächshaus**

| Wirkstoff | Dosierung [g a.i./ha] | Wirkung [%] gegen Digitaria sanguinalis |
|---|---|---|
| A2-9 | 2 | 65 |
| dicamba | 12.5 | 0 |
| A2-9 + dicamba | 2 + 12.5 | 85 (E^{C} = 65, Δ = 20) |

**Tabelle 5-108: Gewächshaus**

| Wirkstoff | Dosierung [g a.i./ha] | Wirkung [%] gegen Echinochloa crus-galli |
|---|---|---|
| A2-9 | 1 | 0 |
| dicamba | 12.5 | 0 |
| A2-9 + dicamba | 1 + 12.5 | 15 (E^{C} = 0, Δ = 15) |

**Tabelle 5-109: Gewächshaus**

| Wirkstoff | Dosierung [g a.i./ha] | Wirkung [%] gegen Brachiaria platyphylla |
|---|---|---|
| A2-10 | 2 | 0 |
| lenacil | 4 | 0 |
| A2-10 + lenacil | 2+4 | 25 (E^{C} = 0, Δ = 25) |

**Tabelle 5-110: Gewächshaus**

| Wirkstoff | Dosierung [g a.i./ha] | Wirkung [%] gegen Brachiaria platyphylla |
|---|---|---|
| A2-10 | 1 | 35 |
| lenacil | 4 | 0 |
| A2-10 + lenacil | 1 + 4 | 65 (E^{C} = 35, Δ = 30) |

**Tabelle 5-111: Gewächshaus**

| Wirkstoff | Dosierung [g a.i./ha] | Wirkung [%] gegen Bidens pilosa |
|---|---|---|
| A2-10 | 2 | 50 |
| lenacil | 4 | 0 |
| A2-10 + lenacil | 2+4 | 80 (E^{C} = 50, Δ = 30) |

**Tabelle 5-112: Gewächshaus**

| Wirkstoff | Dosierung [g a.i./ha] | Wirkung [%] gegen Setaria viridis |
|---|---|---|
| A3-7 | 2 | 0 |
| diflufenzopyr | 12.5 | 50 |
| A3-7 + diflufenzopyr | 2 + 12.5 | 70 (E^{C} = 50, Δ = 20) |

**Tabelle 5-113: Gewächshaus**

| Wirkstoff | Dosierung [g a.i./ha] | Wirkung [%] gegen Brachiaria platyphylla |
|---|---|---|
| A4-2 | 1 | 0 |
| diflufenzopyr | 25 | 60 |
| A4-2 + diflufenzopyr | 1 + 25 | 75 (E^{C} = 60, Δ = 15) |

**Tabelle 5-114: Feld**

| Wirkstoff | Dosierung [g a.i./ha] | Wirkung [%] gegen Stellaria media |
|---|---|---|
| A4-2 | 25 | 63 |
| bromoxynil | 210 | 10 |
| A4-2 + bromoxynil | 25 +210 | 90 (E^{C} = 67, Δ = 23) |

**Tabelle 5-115: Gewächshaus**

| Wirkstoff | Dosierung [g a.i./ha] | Wirkung [%] gegen Echinochloa crus-galli |
|---|---|---|
| A4-7 | 3 | 50 |
| dicamba | 12.5 | 0 |
| A4-7 + dicamba | 3 + 12.5 | 65 (E^{C} = 50, Δ = 15) |

**Tabelle 5-116: Feld**

| Wirkstoff | Dosierung [g a.i./ha] | Wirkung [%] gegen Stellaria media |
|---|---|---|
| A4-7 | 25 | 60 |
| bromoxynil | 210 | 5 |
| A4-7 + bromoxynil | 25 +210 | 88 (E^{C} = 62, Δ = 26) |

## Patentansprüche

1. Herbizide Zusammensetzungen, enthaltend
(A) die Verbindung der Formel (1-85) (Komponente A) oder deren Salze, 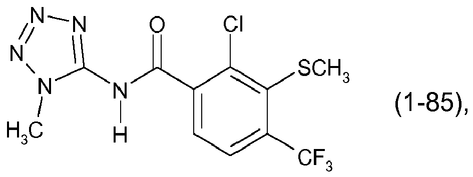 und
(B) ein oder mehrere Herbizide (Komponente B) ausgewählt aus den Gruppen B1 bis B11:
B1 1,3-Diketoverbindungen, umfassend
prohexadione-calcium, trinexapac-ethyl,
alloxydim, clethodim, cycloxydim, profoxydim, sethoxydim, tepraloxydim, tralkoxydim, mesotrione, sulcotrione, tefuryltrione, tembotrione, bicyclopyrone, pinoxaden,
B2 (Sulfon)Amide, umfassend
beflubutamide, bromobutide, dimethenamide, dimethenamide-P, diphenamide, napropamide, pethoxamid, N-[3-Chlor-4-(1-methylethyl)-phenyl]-2-methylpentanamid, naptalam, propyzamide,
diflufenican, etobenzanid, flufenacet, mefenacet, mefluidide, pentanochlor, picolinafen, propanil, N-phenylphtalamic acid,
acetochlor, alachlor, butachlor, dimethachlor, metazachlor, metolachlor, S-metolachlor, pretilachlor, propachlor, propisochlor, (2-chloro-6'-ethyl-N-isopropoxymethylaceto-o-toluidide), thenylchlor,
asulam, carbaryl, carbetamide, chlorpropham, desmedipham, phenmedipham, propham,
butylate, cycloate, dimepiperate, EPTC, esprocarb, methasulfocarb, molinate, orbencarb, pebulate, prosulfocarb, pyributicarb, thiobencarb, tri-allate, vernolate, amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, flucetosulfuron, flupyrsulfuron-methyl-sodium, foramsulfuron, halosulfuron-methyl, imazosulfuron, iodosulfuron-methyl-sodium, mesosulfuron-methyl, metsulfuron-methyl, monosulfuron, nicosulfuron, orthosulfamuron, oxasulfuron, primisulfuron-methyl, prosulfuron, pyrazosulfuron-ethyl, rimsulfuron, sulfometuron-methyl, sulfosulfuron, thifensulfuron-methyl, triasulfuron, tribenuron-methyl, trifloxysulfuron (sodium), triflusulfuron-methyl, tritosulfuron, (benzoic acid, 2-[[[[[4-methoxy-6-(methylthio)-2-pyrimidinyl]amino]carbonyl]amino]-sulfonyl]methyl-ester), flucarbazone-sodium, propoxycarbazone-sodium, thiencarbazone-methyl, cloransulam-methyl, diclosulam, florasulam, flumetsulam, metosulam, penoxsulam, pyroxsulam,
B3 Arylnitrile, umfassend
bromoxynil, dichlobenil, ioxynil, pyraclonil,
B4 Azole, umfassend
benzofenap , pyrazolynate, pyrazoxyfen, pyroxasulfone, topramezone, pyrasulfotole, 3-(3-chloro-5-{[1-methyl-3-(trifluormethyl)-1H-pyrazol-5-yl]oxy}phenoxy)-1-methyl-5-(trifluormethyl)-1H-pyrazole, 3-(3-iodo-5-{[1-methyl-3-(trifluormethyl)-1H-pyrazol-5-yl]oxy}phenoxy)-1-methyl-5-(trifluormethyl)-1H-pyrazole, 1-ethyl-3-(3-fluoro-5-{[1-methyl-3-(trifluormethyl)-1H-pyrazol-5-yl]oxy}phenoxy)-5-(trifluormethyl)-1H-pyrazole, pyraflufen-ethyl, fluazolate,
isouron, isoxaben, isoxaflutole,
imazamethabenzmethyl, imazamox, imazapic, imazapyr, imazaquin, imazethapyr, methazole, oxadiargyl, oxadiazon,
amicarbazone, carfentrazone-ethyl, sulfentrazone, bencarbazone, amitrole, paclobutrazol, uniconazole, cafenstrole, fentrazamide,
weitere Herbizide, umfassend
Aminocyclopyrachlor, N-acetylthiazolidine-4-carboxylic acid, acrolein, aminopyralid, ammonium pelargonate, ammonium sulfamat, aviglycine, benazolin, benfluralin, benfuresate, bentazone, benzobicyclon, 6-benzylaminopurine, borax, butralin, carvone, catechin, chlorflurenol-methyl, chloridazon, chlormequat chloride, chloracetic acid , chlorphthalim, chlorthal-dimethyl, cinidon-ethyl, cinmethylin, clofencet, clomazone, cloxyfonac, cyanamide, cyclanilide, 6-isopentylamino-purin, kinetin, zeatin, dalapon, daminozide, dazomet, n-decanol, difenzoquat metilsulfate, 2,6-diisopropylnaphtalene, dikegulac, dimethipin, dimethylarsenic acid, dinitramine, dinoterb, diquat dibromide, dithiopyr, DNOC, endothal, ethafluralin, ethofumesate, ethylchlozate, ferrous sulfate, flamprop-M-methyl, flufenpyr-ethyl, flumetralin, flumiclorac-pentyl, flumioxazin, flupropanate, flurenol, fluridone, flurochloridone, flurtamone, gibberillic acid, indanofan, isopropalin, isoprothiolane, maleic hydrazide, mepiquat chloride, metam, methylarsonic acid, 1-methylcyclopropene, methyl isothiocyanate, nitrophenolate mixture, nonanoic acid, norflurazon, oleic acid, oryzalin, oxaziclomefone, paraquat dichloride, pendimethalin, pentachlorophenol, pentoxazone, petroleum oils, prodiamine, n-propyl-dihydrojasmonate, pyridate, quinoclamine, sintofen, sodium chlorate, sulfuric acid, tar oils, TCA sodium, tecnazene, thiazopyr, triacontanol, trifluralin und urea sulfate,
B6 (Het)Arylcarbonsäuren, umfassend
dicamba, 2,3,6-TBA,
clopyralid, fluroxypyr, inabenfide, picloram, triclopyr, quinclorac, quinmerac, indol-3-ylacetic acid, 4-indol-3-ylbutyric acid,
2-(1-naphthyl)acetamide, 1-naphtylacetic acid, 2-naphthyloxyacetic acid,
B7 organische Phosphorverbindungen, umfassend
anilofos, bensulide, bilanafos, butimafos, fosamine, glufosinate, glufosinate-Salze, glufosinate-ammonium, glufosinate-sodium, L-glufosinate-ammonium, L-glufosinate-sodium, glyphosate, glyphosate-isopropyl-ammonium, glyphosate-ammonium, glyphosate-trimesium (=sulfosate), glyphosate-diammonium, glyphosate-potassium, piperophos, ethephon und tribufos,
B8 Phenylether, umfassend
acifluorfen-sodium, aclonifen, fluoroglycofen-ethyl, fomesafen, lactofen, oxyfluorfen, bifenox, ethoxyfen-ethyl,
clomeprop,
cloprop, dichlorprop, dichlorprop-P, mecoprop, mecoprop-P,
4-CPA, 2,4-D, MCPA, MCPA-thioethyl, 2,4-DB, MCPB, clodinafop-propargyl, cyhalofop-butyl, diclofop-methyl, diclofop-P-methyl, fenoxaprop-P-ethyl, fluazifop-butyl, fluazifop-P-butyl, haloxyfop, haloxyfop-P, metamifop, propaquizafop, quizalafop, quizalafop-P,
B9 Pyrimidine, umfassend
ancymidol, flurprimidol, pyrimisulfan,
bispyribac-sodium, pyribenzoxim, pyriminobac-methyl, pyribambenz-isopropyl, pyribambenz-propyl,
pyriftalid, pyrithiobac-sodium,
benzfendizone, bromacil, butafenacil, lenacil, terbacil,
2-chloro-4-fluoro-5-[3-methyl-2,6-dioxo-4-(trifluoromethyl)-3,6-dihydropyrimidin-1(2H)-yl]-N-[methyl(1-methylethyl)-sulfamoyl]benzamide,
B10 (Thio)harnstoffe, umfassend
cumyluron,
chlorbromuron, chlorotoluron, chloroxuron, daimuron, diflufenzopyr, dimefuron, diuron, fluometuron, forchlorfenuron, isoproturon, karbutilate, linuron, methyldymron, metobromuron, metoxuron, monolinuron, neburon, siduron, thidiazuron methiuron,
tebuthiuron,
methabenzthiazuron,
B11 Triazine, umfassend
triaziflam, indaziflam,
atrazine, cyanazine, propazine, simazine, terbuthylazine, trietazine,
prometon,
ametryn, dimethametryn, prometryn, simetryn, terbutryn,
hexazinon, metamitron, metribuzin.

2. Herbizide Zusammensetzungen nach Anspruch 1, enthaltend als Komponente B ein oder mehrere Herbizide ausgewählt aus den Gruppen B1 bis B11:
B1 umfassend clethodim, sethoxydim, tepraloxydim, mesotrione, sulcotrione, tefuryltrione, tembotrione, bicyclopyrone, pinoxaden, tralkoxydim,
B2 umfassend dimethenamide, dimethenamide-P, napropamide, pethoxamid, propyzamide, diflufenican, flufenacet, mefenacet, picolinafen, propanil, acetochlor, alachlor, butachlor, metazachlor, metolachlor, S-metolachlor, pretilachlor, thenylchlor, asulam, carbetamide, desmedipham, phenmedipham, esprocarb, molinate, prosulfocarb, thiobencarb, amidosulfuron, chlorimuron-ethyl, cyclosulfamuron, ethoxysulfuron, flupyrsulfuron-methyl-sodium, foramsulfuron, iodosulfuron-methyl-sodium, mesosulfuron-methyl, nicosulfuron, orthosulfamuron, prosulfuron, pyrazosulfuron-ethyl, rimsulfuron, trifloxysulfuron (sodium), flucarbazone-sodium, propoxycarbazone-sodium, thiencarbazone-methyl, florasulam, metosulam, penoxsulam, metsulfuron-methyl, sulfosulfuron, thifensulfuron-methyl, tribenuronmethyl, tritosulfuron, pyroxsulam,
B3 umfassend bromoxynil und ioxynil.
B4 umfassend benzofenap, topramezone, pyrasulfotole, isoxaflutole, imazamox, imazethapyr, oxadiargyl, oxadiazon, amicarbazone, carfentrazone-ethyl, sulfentrazone, uniconazole, cafenstrole, fentrazamide, 3-(3-chloro-5-{[1-methyl-3-(trifluormethyl)-1H-pyrazol-5-yl]oxy}phenoxy)-1-methyl-5-(trifluormethyl)-1H-pyrazole, 3-(3-iodo-5-{[1-methyl-3-(trifluormethyl)-1H-pyrazol-5-yl]oxy}phenoxy)-1-methyl-5-(trifluormethyl)-1H-pyrazole, 1-ethyl-3-(3-fluoro-5-{[1-methyl-3-(trifluormethyl)-1H-pyrazol-5-yl]oxy}phenoxy)-5-(trifluormethyl)-1 H-pyrazole, pyraflufen-ethyl,
B5 umfassend aminopyralid, benazolin, benfuresate, bentazone, cinidon-ethyl, clomazone, diquat dibromide, ethofumesate, flumiclorac-pentyl, flumioxazin, flurtamone, oxaziclomefone, pendimethalin, pyridate und trifluralin,
B6 umfassend dicamba, clopyralid, fluroxypyr, picloram, triclopyr, quinclorac,
B7 umfassend anilofos, glufosinate-ammonium und L-glufosinate-ammonium, glyphosate, glyphosate-isopropyl-ammonium, glyphosate-ammonium, glyphosatetrimesium (=sulfosate), glyphosate-diammonium, glyphosate-potassium,
B8 umfassend acifluorfen-sodium, aclonifen, fluoroglycofen-ethyl, oxyfluorfen, bifenox, dichlorprop-P, mecoprop-P, 2,4-D, MCPA, clodinafop-propargyl, cyhalofop-butyl, diclofop-methyl, diclofop-P-methyl, fenoxaprop-P-ethyl, fluazifop-P-butyl, quizalofop-P,
B9 umfassend bispyribac (sodium), pyriftalid, bromacil, lenacil, 2-chloro-4-fluoro-5-[3-methyl-2,6-dioxo-4-(trifluoromethyl)-3,6-dihydropyrimidin-1 (2H)-yl]-N-[methyl(1-methylethyl)-sulfamoyl]benzamide,
B10 umfassend cumyluron, daimuron, diuron, isoproturon, diflufenzopyr,
B11 umfassend atrazine, simazine, terbuthylazine, ametryn, terbutryn, metamitron, metribuzin.

3. Herbizide Zusammensetzungen nach Anspruch 1 oder 2, enthaltend als Komponente B ein oder mehrere Herbizide ausgewählt aus den Gruppen B1, B2, B4, B5, B8, B9 und B11:
B1 umfassend clethodim, sulcotrione, tefuryltrione, tembotrione, bicyclopyrone, pinoxaden,
B2 umfassend dimethenamide-P, napropamide, diflufenican, flufenacet, mefenacet, acetochlor, metazachlor, S-metolachlor, asulam, desmedipham, phenmedipham, molinate, prosulfocarb, amidosulfuron, ethoxysulfuron, foramsulfuron, iodosulfuron-methyl-sodium, mesosulfuron-methyl, flucarbazone-sodium, propoxycarbazone-sodium, thiencarbazone-methyl, florasulam, metosulam, metsulfuron-methyl, sulfosulfuron, thifensulfuron-methyl, tribenuron-methyl, tritosulfuron, pyroxsulam,
B4 umfassend pyrasulfotole, isoxaflutole, oxadiargyl, oxadiazon, amicarbazone, fentrazamide, 3-(3-chloro-5-{[1-methyl-3-(trifluormethyl)-1H-pyrazol-5-yl]oxy}phenoxy)-1-methyl-5-(trifluormethyl)-1H-pyrazole, 3-(3-iodo-5-{[1-methyl-3-(trifluormethyl)-1H-pyrazol-5-yl]oxy}phenoxy)-1-methyl-5-(trifluormethyl)-1H-pyrazole, 1-ethyl-3-(3-fluoro-5-{[1-methyl-3-(trifluormethyl)-1H-pyrazol-5-yl]oxy}phenoxy)-5-(trifluormethyl)-1H-pyrazole, pyraflufen-ethyl, imazamox,
B5 umfassend aminopyralid, benfuresate, ethofumesate, flurtamone und
oxaziclomefone,
B8 umfassend aclonifen, diclofop-methyl, diclofop-P-methyl, fenoxaprop-P-ethyl, MCPA, 2,4-D, clodinafop-ethyl,
B9 umfassend bispyribac (sodium), bromacil,
B11 umfassend metamitron, metribuzin, terbuthylazine.

4. Verfahren zur Bekämpfung von Schadpflanzen in Kulturen, **dadurch gekennzeichnet, daß** man eine herbizid wirksame Menge einer herbiziden Zusammensetzung gemäß einem oder mehreren der Ansprüche 1 bis 3 auf die Schadpflanzen, Pflanzen, Pflanzensamen oder die Fläche, auf der die Pflanzen wachsen, aufbringt.

5. Verfahren gemäß Anspruch 4, **dadurch gekennzeichnet, daß** die Pflanzen aus der Gruppe Zuckerrohr, Mais, Weizen, Roggen, Gerste, Hafer, Reis, Sorghum, Baumwolle und Soja stammen.

6. Verfahren gemäß Anspruch 4 oder 4, **dadurch gekennzeichnet, daß** die Pflanzen gentechnisch verändert sind.

7. Verbindung der Formel (1-85)
